# EUROPÄISCHE PATENTSCHRIFT

(11) **EP 2 348 455 B1**
(45) Veröffentlichungstag und Bekanntmachung des Hinweises auf die Patenterteilung: **02.06.2021**
(21) Anmeldenummer: 11002348.8
(22) Anmeldetag: 13.12.2006
(51) Int. Cl.: G06K 19/07, G06K 7/00

(54) **Tragbarer Datenträger mit aktiver Kontaktlosschnittstelle**
Portable data carrier with active contactless interface
Support de données portatif doté d'une interface active sans contact

(30) Priorität: 22.12.2005 DE 102005061660
(43) Veröffentlichungstag der Anmeldung: 27.07.2011
(62) Teilanmeldung aus: 09007006.1
(73) Patentinhaber: Giesecke+Devrient Mobile Security GmbH, 81677 München (DE)
(72) Erfinder: Finkenzeller, Klaus, 85774 Unterföhring (DE)

(56) Entgegenhaltungen:
- FR-A1- 2 815 490
- INSIDE Contactless: "Redaer to Reader technology", , 30. Juli 2004 (2004-07-30), XP002739685, Gefunden im Internet: URL:http://www.smartcard.co.uk/articles/R2 R%20Technology%201_0.pdf

## Beschreibung

Die vorliegende Erfindung betrifft einen tragbaren Datenträger, wie beispielsweise eine Massenspeicherkarte, ein Verfahren zur kontaktlosen Datenübertragung zwischen dem tragbaren Datenträger und einem Lesegerät sowie ein System, umfassend den tragbaren Datenträger sowie eine Endgerät, in welches der tragbare Datenträger einsetzbar ist.

Tragbare Datenträger, wie Chipkarten oder Massenspeicherkarten, beispielsweise eine MultiMediaCard (MMC) oder eine Secure Digital Card (SD Card), haben inzwischen vermehrt sowohl eine kontaktbehaftete Schnittstelle als auch eine kontaktlose Schnittstelle. Die tragbaren Datenträger können somit beispielsweise auch als Transponder in RFID-Systemen eingesetzt werden.

Herkömmlich erfolgt sowohl die Energieversorgung eines Transponders in einem RFID-System als auch der Datenaustausch zwischen dem Transponder und einem Lesegerät unter Verwendung magnetischer oder elektromagnetischer Felder. RFID-Transponder besitzen eine elektronische Schaltung und je nach Frequenzbereich eine Antennenspule (z.B. 13,56 MHz) oder eine elektromagnetische Antenne (z.B. 868 MHz). Über die Antenne kann dem Feld des Lesegerätes die zum Betrieb des Transponders benötigte Energie entnommen sowie die Datenübertragung durchgeführt werden.

Bis zu einem bestimmten Abstand zwischen Lesegerät und Transponder, welcher auch als Energiereichweite bezeichnet wird, kann der Transponder dem Feld des Lesegerätes gerade noch ausreichend Energie zum Eigenbetrieb seiner Schaltung entnehmen. Typische Energiereichweiten solcher Systeme sind etwa 10 cm für ISO 14443 und bis zu 1 m für ISO 15693 kompatible Systeme.

Die Reichweite, innerhalb derer eine Kommunikation im System durch Datenübertragung möglich ist, kann erhöht werden durch Verwendung von aktiven Transpondern, also Transpondern mit eigener Energieversorgung. Die Energieversorgung des aktiven Transponders, beispielsweise in Form einer Batterie, betreibt dessen elektronische Schaltung. Herkömmliche Transponder ohne eigene Energieversorgung werden dagegen als passive Transponder bezeichnet.

RFID-Systeme, beispielsweise für verschiedene Kopplungsarten, sowie eine Lastmodulation unter Verwendung eines Hilfsträgers in induktiv gekoppelten RFID-Systemen werden insbesondere unter Kapitel 3.2 in dem "RFID-Handbuch" von Klaus Finkenzeller beschrieben.

Zur einfachen und schnellen kontaktlosen Kommunikation zwischen zwei Geräten wurde von den Firmen Philips und Sony eine induktive Übertragungstechnik entwickelt, welche als sogenannte Nahfeldkommunikation (NFC, Near Field Communication) bekannt ist. Diese Technik wird beispielsweise in Mobilfunkgeräten oder PDAs integriert, um eine Kommunikation zwischen den Geräten oder mit einem Computer zu ermöglichen. Die Kopplung der beiden Geräte findet über Spulen statt, wobei die Trägerfrequenz wie in RFID-Systemen 13,56 MHz beträgt. Wie in dem NFC-Standard ISO/IEC 18092 näher beschrieben, gibt es in NFC-Systemen einen aktiven Kommunikationsmodus und einen passiven Kommunikationsmodus. In dem aktiven Modus erzeugen zwei NFC-Einheiten abwechselnd ihr eigenes RF-Feld als Signalträger, schalten also wie in einem klassischen Mobilfunksystem, beide aufeinander abgestimmt, zwischen Sende- und Empfangsbetrieb hin und her. In dem passiven Modus müssen sich die beiden NFC-Einheiten dagegen einigen, welche Einheit als Lesegerät agiert und ein Feld erzeugt, das die andere Einheit dann mittels Lastmodulation beeinflussen kann. Primär aufgrund der verwendeten kleinen Antennendurchmesser sind in NFC-Systemen-insbesondere im passiven Modus - nur geringe Kommunikationsreichweiten möglich. Gemäß WO 2004/063971 A1 soll eine Einheit, welches eine entsprechende Anforderung im Rahmen der kontaktlosen Kommunikation erkennt, eine Modus-Umschaltung, insbesondere zwischen einem Tag-Talk-First-Modus und einem Reader-Talk-First-Modus, vornehmen.

Selbst bei aktiven Transpondern ergibt sich das Problem, dass die Datenübertragung vom Transponder zum Lesegerät durch die mit zunehmendem Abstand zwischen Lesegerät und Transponder schwächer werdenden Signale begrenzt ist.

Für RFID-Systeme, die nach dem Prinzip der Rückstreuung (Backscatter) arbeiten, werden dagegen typischerweise Kommunikationsreichweiten von 10 m erreicht. In WO 2005/0739006 A1 wird die Reichweite eines solchen Transponders noch weiter erhöht, indem ein aktiv sendendes Element vorgesehen wird.

US 6161762 A1 zeigt eine Karte, die abhängig von dem Vorliegen eines externen Kontaktlos-Kommunikationsfeldes zwischen einem kontaktlosen und einem kontaktbehafteten Modus der Karte umschaltet.

In der Regel können bei induktiv gekoppelten Systemen, welche nach dem Prinzip der Lastmodulation Daten zum Lesegerät übertragen, auch mit aktivem Transponder keine größeren Reichweiten als 1 bis 2 m erzielt werden. FR 2 815 490 A1 beschreibt ein Lesegerät, in welchem in einer Variante anstelle einer passiven Lastmodulation ein eigenes gesendetes Feld verwendet wird. In der Internet-Veröffentlichung "Reader to Reader technology" von B. Charrat wird ein Lesegerätechip ohne eigene Antenne in einem Mobilfunkgerät beschrieben, wobei der Lesegerätechip eine in das Mobilfunkgerät eingebaute Antenne verwendet.

Daher ist es Aufgabe der Erfindung, die Reichweite der Datenübertragung in einem Lastmodulations-System umfassend ein Lesegerät und einen tragbaren Datenträger gegenüber herkömmlichen Systemen mit aktiven oder passiven Transpondern zu vergrößern.

Die Aufgabe wird durch die Merkmale der unabhängigen Ansprüche gelöst. In davon abhängigen Ansprüchen sind vorteilhafte Ausgestaltungen und Weiterbildungen der Erfindung angegeben.

Erfindungsgemäß sendet ein tragbarer Datenträger, vorzugsweise eine Massenspeicherkarte, ein selbst erzeugtes Feld als Signal zu einem Lesegerät, mit welchem Transponder durch Modulation des Lesegerätfeldes kommunizieren können, derart dass das Lesegerät das Signal als Modulation durch einen herkömmlichen Transponder auswerten kann. Ohne eine Last- oder Rückstreuungs-Modulation des Lesegerätfeldes ausführen zu müssen, sendet also der tragbare Datenträger selber ein Feld aus, welches dem Lesegerät eine Modulation des Lesegerätfeldes durch einen Transponder vortäuscht. Eine erfindungsgemäße Transpondereinheit weist Mittel zum Senden des entsprechend modulierten Signals auf. Die Gesamtreichweite des Systems wird folglich nicht mehr durch die Kommunkationsreichweite des Lesegerätes begrenzt, sondern ist darüber hinaus erweitert bis zu einer Sendereichweite der Transpondereinheit.

In einer bevorzugten Ausgestaltung kann in dem tragbaren Datenträger der aktive Betriebsmodus und/oder ein passiver Betriebsmodus ausgewählt werden, in welchem der tragbare Datenträger eine Modulation des Lesegerätfeldes durchführt.

Vorzugsweise erfolgt das Auswählen des Betriebsmodus abhängig von einer Energieversorgung des tragbaren Datenträgers. Um die Wahl des Betriebsmodus alternativ oder zusätzlich auch durch ein Endgerät, in welches der tragbare Datenträger eingesetzt ist, beeinflussbar zu gestalten, kann der Betriebsmodus abhängig von einem externen Auswahlsignal oder einem vom Datenträger empfangenen Kommando erfolgen.

Ebenfalls ergänzend oder alternativ zu einem Auswählen des Betriebsmodus kann der aktive Betriebsmodus für die kontaktlose Datenübertragung deaktiviert werden.

Es ist besonders vorteilhaft, wenn die Deaktivierung abhängig von einer auf dem tragbaren Datenträger ausgeführten Applikationen erfolgt. Somit kann auf einem tragbaren Datenträger eine erste Applikation die vergrößerte

Reichweite des aktiven Betriebsmodus verwenden und eine zweite Applikation, sobald sie auf dem tragbaren Datenträger ausgeführt wird, den aktiven Betriebsmodus deaktivieren, um die mit der geringeren Reichweite verbundene erhöhte Sicherheit zu erzielen.

Es ist besonders vorteilhaft, wenn der tragbare Datenträger gemäß der vorliegenden Erfindung zwischen seiner eigenen Antenne und einer Antenne eines Endgerätes, welche der tragbare Datenträger für die kontaktlose Datenübertragung verwenden kann, umschalten kann. Das Umschalten zwischen den Antennen kann sowohl in Antwort auf ein durch den tragbaren Datenträger empfangenes Kommando als auch in Antwort auf ein intern erzeugtes Umschaltsignal erfolgen. Insbesondere kann der tragbare Datenträger angepasst sein zu erkennen, ob er in ein Endgerät eingebaut ist, und seinen Verhalten entsprechend modifizieren.

Weitere Merkmale und Vorteile der Erfindung ergeben sich aus der folgenden Beschreibung erfindungsgemäßer Ausführungsbeispiele im Zusammenhang mit den begleitenden Zeichnungen. Darin zeigen:
- Figur 1: ein System umfassend eine Transpondereinheit und ein Lesegerät,
- Figur 2: eine Transpondereinheit schematisch mit einer erfindungsgemäßen Schaltung,
- Figur 3: ein Prinzipschaltbild eines analogen Ringmodulators,

- Figur 4: eine Ausführungsform eines Senders für eine Transponderein heit mit digitalem Ringmodulator,
- Figur 5: ein Sender für eine Transpondereinheit mit ASK_Modulator als Trägerfrequenzmodulator,
- Figur 6: eine Sender für eine Transpondereinheit mit ASK_Modulator als Trägerfrequenzmodulator und einem modifizierten Hilfsträgermodulator,
- Figur 7: eine Transpondereinheit, in welcher ein Sicherheitsmodul über eine S²C-Schnittstelle an einen Interfacebaustein angebunden ist,
- Figur 8: ein Interfacebaustein für eine Transpondereinheit gemäß Figur 7,
- Figur 9: eine Transpondereinheit, in welcher ein Chip mit herkömmlicher HF-Schnittstelle an einen Interfacebaustein in einer weiteren Ausführungsform angebunden ist,
- Figur 10: eine Transpondereinheit, in welcher ein Chip mit herkömmlicher HF-Schnittstelle an einen modifizierten Interfacebaustein angebunden ist,
- Figur 11: einen Ausschnitt einer Transpondereinheit, in welcher ein Chip mit herkömmlicher HF-Schnittstelle induktiv an einen Interfacebaustein gekoppelt ist,
- Figur 12: ein System aus einem Endgerät und einer Massenspeicherkarte mit zusätzlicher kontaktloser Schnittstelle,
- Figur 13: ein Interface-Baustein mit Mitteln zur Auswahl eines aktiven oder passiven Betriebsmodus,
- Figur 14: ein System aus einem tragbaren Datenträger mit interner Antenne sowie einem Endgerät mit einer weiteren für den tragbaren Datenträger nutzbaren Antenne in einer ersten Ausführungsform,
- Figur 15: aus einem tragbaren Datenträger mit interner Antenne sowie einem Endgerät mit einer weiteren für den tragbaren Datenträger nutzbaren Antenne in einer zweiten Ausführungsform,
- Figur 16: die Beschaltung einer kontaktbehafteten Schnittstelle einer MMC-Karte in einem ersten Betriebsmodus,
- Figur 17: die Beschaltung der kontaktbehafteten Schnittstelle einer MMC-Karte in einem zweiten Betriebsmodus,
- Figur 18: ein System aus einem Endgerät und einem tragbaren Datenträger, der erkennt, ob er in ein Endgerät eingebaut ist, und
- Figur 19: ein Interface-Baustein mit einer bevorzugten PLL-Schaltung.

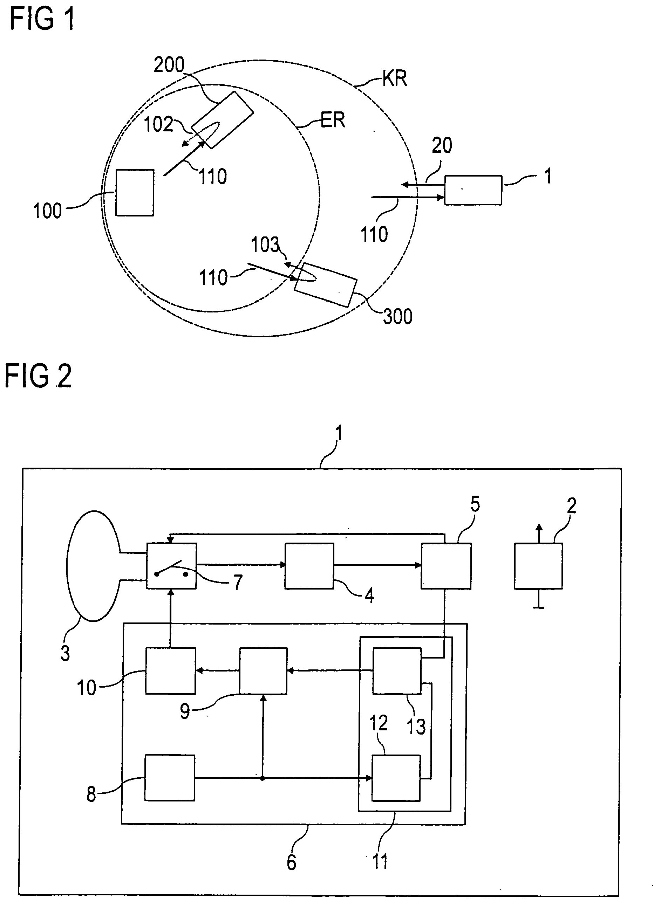

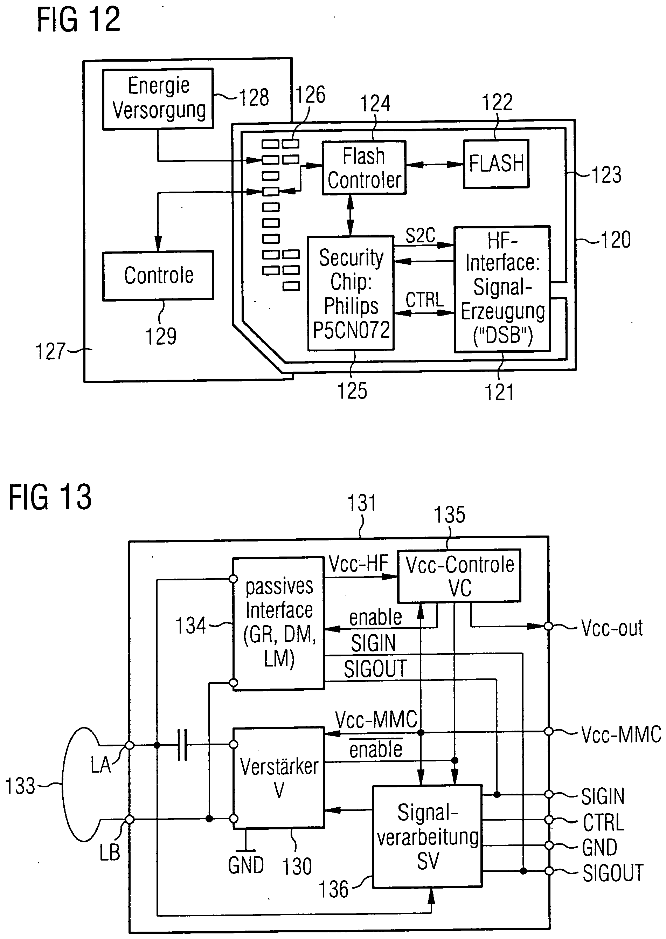

Im Folgenden wird zunächst mit Bezug auf Fig. 12 ein Anwendungsgebiet für die vorliegende Erfindung beschrieben. Ein tragbarer Datenträger ist über seine kontaktbehaftete Schnittstelle mit einem Endgerät verbindbar und weist zudem als Transpondereinheit erfindungsgemäß verbesserte Mittel zur kontaktlosen Kommunikation auf Das grundlegende Prinzip zur Erhöhung der Reichweite in einem System mit einer Transpondereinheit und einem entsprechenden Lesegerät wird anschließend anhand von Fig. 1 beschrieben.

Weitere Optionen und Verbesserungsmöglichkeiten für eine derartige kontaktlose Kommunikation mit erhöhter Reichweite werden mit Bezug auf die Fig. 2 bis 11 näher ausgeführt. Verbesserungen, die insbesondere für die in Fig. 12 dargestellten Anwendung hilfreich sind, werden schließlich mit Bezug auf die Fig. 13 bis 19 beschrieben.

Fig. 12 zeigt eine sichere Massenspeicherkarte (MultiMediaCard - MMC) 120, die über ihre kontaktbehaftete Schnittstelle (Kontaktschnittstelle) 126 mit einem Endgerät 127 reversibel verbindbar ist. Die Massenspeicherkarte 120 weist einen Massenspeicher 122 sowie eine zugeordnete erste Steuereinheit 124 auf. Eine zweite Steuereinheit 125, die vorzugsweise in der Form eines Chipkartencontrollers ausgebildet ist, ist mit einer Schnittstelleneinheit (Interface-Baustein) 121, an welcher eine Antenne 123 der Massenspeicherkarte 120 angeschlossen ist, und der ersten Steuereinheit 124 verbunden.

Die Steuerung der Massenspeicherkarte 120 muss nicht notwendigerweise in die erste Steuereinheit 124 und die zweite Steuereinheit 125 aufgeteilt sein, vielmehr können die beiden Speichereinheiten und optional auch der Interface-Baustein 121 als eine einzige Komponente ausgebildet sein. Die Massenspeicherkarte 120 kann mit einer nicht dargestellten Batterie, vorzugsweise einer Folienbatterie, ausgestattet sein.

Die Massenspeicherkarte 120 erzeugt, wie in Bezug auf die Fig. 1 bis 11 näher beschrieben, für eine drahtlosen Kommunikation mit einem zweiten Gerät ein eigenes elektromagnetisches Feld. Das Feld der Massenspeicherkarte wird - unabhängig von einer Modulation des Feldes des zweiten Gerätes - so erzeugt und gesendet, dass es für das zweite Gerät als eine Modulation seines Feldes erscheint. Die Massenspeicherkarte kann somit über Distanzen mit dem zweiten Gerät kommunizieren, die nicht von der Kommunikationsreichweite des zweiten Gerätes abhängig sind. Als Transpondereinheit im Sinne der vorliegenden Erfindung kann die Massenspeicherkarte und/oder das System aus Massenspeicherkarte und Endgerät agieren.

Figur 1 zeigt ein System zur Datenübertragung umfassend eine Transpondereinheit 1 und ein mit der Transpondereinheit 1 zusammenwirkendes Lesegerät 100.

Das herkömmliche Lesegerät 100 kann innerhalb der Energiereichweite ER mit herkömmlichen passiven Transpondern 200 und innerhalb der Kommunikationsreichweite KR mit herkömmlichen aktiven Transpondern 300 Daten austauschen.

Abhängig von einem verwendeten Systemtyp können Daten dabei von den Transpondern 200,300 zu dem Lesegerät 100 entweder mittels Lastmodulation (induktive Kopplung) oder mittels moduliertem Rückstrahlquerschnitt (elektromagnetische Backscatter-Kopplung) übertragen werden. Im Folgenden werden bevorzugt Ausführungsformen für Systeme beschrieben, die nach dem Prinzip der Lastmodulation Daten an das Lesegerät übertragen. Die einzelnen Aspekte der Ausführungsformen sind aber weitgehend analog auch auf Systeme anwendbar, die nach dem Prinzip modulierter Rückstrahlquerschnitte der Transpondereinheit arbeiten.

Die Transpondereinheit 1 sendet zur Datenübertragung an das Lesegerät 100 ein Signal, daß das Lesegerät 100 als Signal eines Transponders auswerten kann, der eine Lastmodulation des Feldes 110 des Lesegerätes 100 durchführt. Im Gegensatz zu den herkömmlichen Transpondern 200, 300, die das Feld 110 des Lesegerätes 100 zu einem modulierten Lesegerätfeld 102,103 modulieren, erzeugt und sendet die Transpondereinheit 1 also ein eigenes moduliertes Feld 20 als das Signal zur Datenübertragung. Die Transpondereinheit 1 setzt somit eigene Energie zum Zwecke der Datenübertragung ein.

Um ein besseres Signal-Rauschverhältnis zu erzielen, wird in einem induktiven Systemen mit einer Trägerfrequenz fr des RFID-Lesegerätes von beispielsweise 13,56 MHz in bekannter Weise ein Hilfsträger f_{H} mit f_{H} < fr, also beispielsweise f_{H} = 848 kHz (ISO /IEC 14443) verwendet. Der Lastwiderstand in der Transpondereinheit wird mit der Frequenz f_{H} ein- und ausgeschaltet, so daß im Signalspektrum neben dem starken Signal der Trägerfrequenz fr des Lesegerätes zwei Hilfsträgersignale im Abstand von +/- f_{H} entstehen. Wird nun der Hilfsträger in der Transpondereinheit 1 entsprechend den zu übertragenden Daten moduliert, so entstehen die Modulationsseitenbänder, welche die Information tragen, im Spektrum jeweils unter- und oberhalb der beiden Hilfsträger. Die zu übertragenden Daten sind also gleichermaßen in den Seitenbändern der Hilfsträger enthalten, welche jeweils auf beiden Seiten der zwei entsprechenden Spektrallinien angeordnet sind. Die Datenübertragung erfolgt hier durch ASK, FSK oder PSK-Modulation des Hilfsträgers im Takt des Datenflusses. Im Gegensatz zur Lastmodulation ohne Hilfsträger, bei der die Daten in Seitenbändern um die Trägerfrequenz des Lesegeräts herum übertragen werden, kann das Hilfsträgersignal im Lesegerät besser ausgefiltert und demoduliert werden, um so die Daten zurückzugewinnen.

Die Transpondereinheit 1 erzeugt und sendet entsprechend ein eigenes Feld 20, welches zumindest die Modulationsseitenbänder um die Trägerfrequenz fr oder die Modulationsseitenbänder um eine Hilfsträgerfrequenz f_{H}, in der Regel aber die Modulationsseitenbänder beider Hilfsträger mitsamt der beiden Hilfsträger, umfasst.

Solch ein System kann vielseitig eingesetzt werden und vermeidet in vielen Anwendungsfällen die Notwendigkeit einer weiteren Schnittstelle im Lesegerät.

Beispielsweise kann sich in einem Gebäude, in dem das System als Zugangssystem eingerichtet ist, jede zugangsberechtigte Person mittels einer Transpondereinheit 1 in Form einer Chipkarte kontaktlos authentisieren. Mit RFID-Lesegeräten des Zugangssystems ausgestattete Türen in dem Gebäude, also auch Zufahrtstore, können durch die Chipkarte so frühzeitig geöffnet werden, daß keine Wartezeit für ein automatisches Öffnen der Tür ensteht.

Ein weiteres Beispiel ist der Einsatz in Warenhäusern, Lager- oder Transportsystemen, in denen respektive Artikel, Lager- oder Transportbehältnisse mit einer erfindungsgemäßen Transpondereinheit ausgestattet sind. So wird es möglich, die Artikel oder Behältnisse ohne größere Reichweitenbeschränkungen insbesondere auch automatisch zu registrieren.

Weiterhin könnte ein mobiles Terminal umfassend eine erfindungsgemäße Transpondereinheit als Wartungs- oder Überwachungseinheit verwendet werden, um eine Vielzahl von RFID-Lesegeräten, beispielsweise an den Kassen eines Supermarktes oder eines Zugangssystems, auf Funktionsfähigkeit zu prüfen oder aus der Ferne zu warten.

Figur 2 zeigt rein schematisch die Transpondereinheit 1, beispielsweise in Form einer induktiv gekoppelten Chipkarte, welche die üblichen, hier nicht explizit gezeigten Bestandteile umfasst. Zur Vereinfachung ist lediglich eine erfindungsgemäße RFID-Transpondereinheit in einer Chipkarte dargestellt. Die Transpondereinheit verfügt über eine Batterie 2, eine induktive Antenne 3 sowie eine elektronische Schaltung 4, 5, 6, 7. Die elektronische Schaltung besteht im wesentlichen aus drei Funktionsblöcken, einem Empfänger 4, einer Steuerung 5 und einem Sender 6. Ein Schalter 7 dient zur Umschaltung der Antenne 3 zwischen dem Empfänger 4 und dem Sender 6.

Der Empfänger 4 ist vorgesehen, ein vom Lesegerät 100 übertragenes Signal zu demodulieren, um daraus Daten zu extrahieren. Die extrahierten Daten werden an die Steuerung 5 weitergeleitet, welche sie verarbeitet und an das Lesegerät 100 zu versendende Daten erzeugt. Des weiteren übermittelt die Steuerung 5 ein Steuersignal an den Schalter 7, welcher zwischen Empfangs- und Sendebetrieb der Transpondereinheit umschaltet. Es kann aber stattdessen zum Senden eine separate Antenne vorgesehen werden. Als Steuerung 5 ist beispielsweise ein Teil des Betriebssystem eines tragbaren Datenträgers, wie einer Chipkarte, verwendbar.

Der Sender 6 besteht aus einem Oszillator 8, einem Modulator, wobei zunächst eine Ausführung als Ringmodulator 9 beschrieben wird, und einem Endverstärker 10. Desweiteren ist der Sender 6 der in Figur 2 dargestellten Transpondereinheit mit einer elektronischen Baugruppe 11 zum Erzeugen und Modulieren eines Hilfsträgersignals erweitert, um die Datenübertragung von der Transpondereinheit zu einem Lesegerät 100 mit einem Hilfsträgersignal durchzuführen. Das Hilfsträgersignal kann je nach Verwendung der Transpondereinheit unterschiedliche Frequenzen besitzen, beispielsweise 848 kHz nach ISO 14443, 424 kHz nach ISO 15693 und 212 kHz für LEGIC, aber gegebenenfalls auch ganz entfallen.

In der in Figur 2 gezeigten Transpondereinheit ist vorgesehen, dass die Baugruppe 11 mittels eines Frequenzteilers 12 die Oszillatorfrequenz durch einen bestimmten Faktor teilt, beispielsweise durch binäre Teilung. Das dadurch erzeugte Hilfsträgersignal wird mit den zu sendenden Daten, welche der Baugruppe 11 von der Steuerung 5 zugeführt werden, moduliert.

Die Modulation des Hilfsträgers in der Baugruppe 11 erfolgt beispielsweise in einem AND-Gatter 13 durch eine sogenannte 100% Amplitudentastung (Amplitude Shift Keying, ASK). Dabei wird die Amplitude des durch Frequenzteilung erzeugten Signals anhand der zu sendenden Daten zwischen zwei Zuständen "on" und "off" umgeschaltet. Alternativ hierzu kann eine (B)PSK-Modulation, beispielsweise nach ISO 14443 Typ B, oder eine FSK-Modulation erfolgen.

Um die aktiven Bauteile der Transpondereinheit zumindest teilweise mit Energie zu versorgen und um die Energiereichweite zwischen der Transpondereinheit 1 und dem Lesegerät 100 zu erhöhen, besitzt der erfindungsgemäße Transpondereinheit eine Batterie 2.

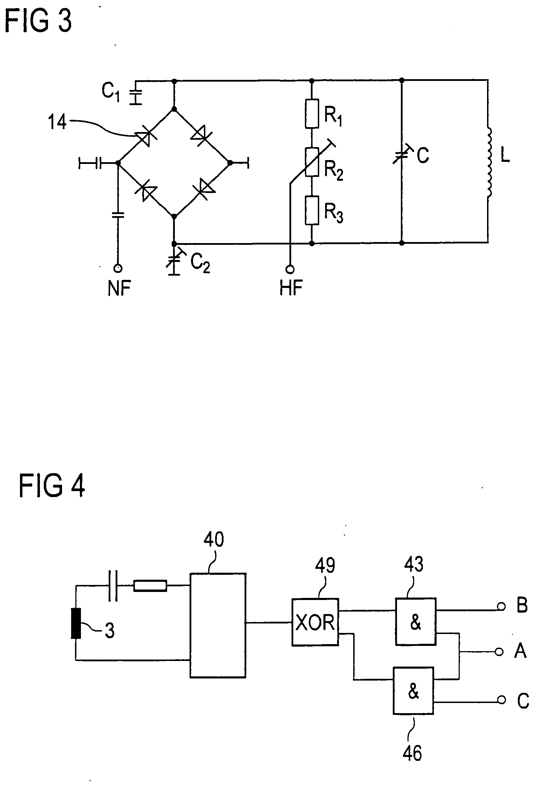

Sowohl das Oszillatorsignal wie auch das in der Baugruppe 11 erzeugte ASK-modulierte Signal werden dem Ringmodulator 9 zugeführt, dessen Schaltungsaufbau weiter unten anhand von Figur 3 genauer beschrieben wird.

Der Ringmodulator 9 hat die Besonderheit, dass er eine Sonderform der Amplitudenmodulation durchführt. Wie bei der üblichen Amplitudenmodulation werden im Frequenzspektrum betrachtet zwei Spektrallinien im Abstand der Frequenz des ASK-modulierten Signals um die Frequenz des Oszillatorsignals, die sogenannte Trägerfrequenz, erzeugt. Bei der Amplitudenmodulation im Ringmodulator 9 wird die Trägerfrequenz des starken und energiereichen Oszillatorsignals weitgehend unterdrückt. Die im ASK-modulierten Signal enthaltenen, zu sendenden Daten befinden sich nach der Amplitudenmodulation im Ringmodulator 9 in Seitenbändern um die zwei Spektrallinien der Hilfsträgerfrequenz. Eine solche Modulation wird Double-Side-Band-(DSB)-Modulation bzw. Double-Side-Band-Supressed-Carrier-(DSSC)-Modulation genannt. Mit der Trägerfrequenz werden keine Daten übertragen. Vielmehr wird durch den Einsatz des Ringmodulators 9, der die Trägerfrequenz unterdrückt, das Ziel erreicht, entweder mit geringerer Sendeleistung oder mit deutlich erhöhter Reichweite Daten an das Lesegerät 100 senden zu können. Die erhöhte Reichweite ist vor allem dann möglich, wenn die gesamte Sendeleistung in die Seitenbänder gesteckt wird, in denen sich die zu sendenden Daten befinden. Zwar wird die Trägerfrequenz grundsätzlich zur Demodulation des Signals benötigt, um im Lesegerät die von der Transpondereinheit übermittelten Daten zu extrahieren. Da die Trägerfrequenz aber ohnehin im Lesegerät vorliegt, ist es nicht notwendig, dass das Transpondersignal selbst diese Frequenz enthält.

Am Ausgang des Ringmodulators 9 steht dann ein Ausgangssignal zur Verfügung, welches die zwei Modulationsseitenbänder enthält und mit einem durch Lastmodulation bzw. Backscatter-Modulation erzeugten Signal (hinreichend genau) identisch ist. Das durch den Ringmodulator 9 erzeugte Ausgangssignal kann dann mittels des Verstärkers 10 ggf. noch verstärkt werden und über den Schalter 7, welcher durch ein Signal der Steuerung 5 auf den Sendebetrieb der Transpondereinheit umgeschaltet wird, der Antenne 3 zum Versand der zu sendenden Daten zugeführt werden.

Der direkte Anschluss des Ausgangs des Ringmodulators an die Antenne ist ebenso möglich. Dann muss jedoch die Antenne entsprechend angepasst werden und eine mögliche Rückwirkung des vom Lesegerät eingekoppelten Signals auf den Ringmodulator beachtet werden, da üblicherweise zum Senden und Empfangen die selbe Antenne genutzt wird und da das Lesegerät fortwährend sendet.

Die Transpondereinheit 1 wird in einem ersten (Aktiv-)Betriebsmodus als aktiv sendender Transponder betrieben. In einem zweiten (Passiv-)Betriebsmodus arbeitet die Transpondereinheit dagegen wie ein gewöhnlicher passiver Transponder, der eine Lastmodulation auf dem Feld des Lesegeräts ausführt.

Beispielsweise kann der Empfänger 4 zusätzlich als herkömmlicher, durch die Steuerung 5 angesteuerter Lastmodulator ausgebildet sein. Die Steuerung 5 schaltet dann entweder den Sender 6 ein und den Lastmodulator ab oder den Lastmodulator ein und den Sender 6 ab. Der Schalter 7 wird dementsprechend geschaltet. Als Kriterium für das Umschalten von einem passiven in einen aktiven Betriebszustand kann beispielsweise die empfangene Signalstärke, das Vorliegen und/oder Ausreichen einer externen Spannungsversorgung (an einem optionalen nicht gezeigten Anschluß Vcc) oder das Ausreichen einer internen Spannungsversorgung (Ladezustand der Batterie 2) dienen. Es ist somit beispielsweise möglich eine Transpondereinheit 1 erst passiv zu betreiben und bei beispielsweise unabsichtlich zunehmendem Abstand zum Lesegerät in einen aktiven Betriebsmodus umzuschalten.

Auch die Art der Anwendung, für welche die Daten übertragen werden, kann ein Kriterium für den Betriebsmodus sein. So sollte die Transpondereinheit bei sicherheitskritischen Anwendungen nur im passiven Betriebsmodus arbeiten. Dagegen wird eine unkritischere Anwendung, wie eine Prüfung der Zugangsberechtigung zu Räumen oder Gebäuden, vorzugsweise im aktiven Betriebsmodus arbeiten. Ein Defaultwert für den allgemein oder aktuell bevorzugten Betriebsmodus sollte beispielsweise über ein Endgerät, in welches die Transpondereinheit eingesetzt oder integriert ist, für den Besitzer der Transpondereinheit wählbar sein. Das Umschalten zwischen den aktiven und passiven Betriebsmodi erfolgt vorzugsweise während des Empfangs von Daten durch die Transpondereinheit, also im aktiven oder passiven Empfangsbetrieb.

In Figur 3 ist ein Prinzipschaltbild eines Ringmodulators 9 dargestellt. Wie bereits beschrieben, ist das Wesentliche an der Verwendung des Ringmodulators 9, dass er eine Amplitudenmodulation durchführt, wobei zwar die Modulationsseitenbänder eines Hilfsträgers in gewohnter Weise erzeugt werden, die Trägerfrequenz jedoch weitestgehend unterdrückt wird. Beispielsweise kann in der erfindungsgemäßen Transpondereinheit ein MC1496 Balanced Modulator der Firma ON Semiconductor eingesetzt werden, der besonders gut zur Trägerunterdrückung geeignet ist. Der Ringmodulator kann vollständig auf einem Transponderchip integriert werden, wodurch ein erfindungsgemäßer Transponderchip bei vollständiger Integration aller Bestandteile lediglich Anschlüsse für die Antenne 3 und die Spannungsversorgung benötigt.

Der Eingang HF des Ringmodulators 9 wird mit dem hochfrequenten Ausgangssignal des Oszillators 8 gespeist. Dabei entspricht die Frequenz des Oszillatorsignals vorzugsweise genau der Sendefrequenz des Lesegeräts 100 (z.B. 13,56 MHz). Der Eingang NF des Ringmodulators 9 wird mit einem Datensignal im Basisband (z.B. für Felica-System) oder mit einem modulierten Hilfsträger (z.B. bei ISO 14443, ISO 15693), wie oben beschrieben, gespeist.

Vier Dioden 14 sind im Ringmodulator 9 zu einem Ring zusammengeschaltet, indem jeweils eine Anode an eine Katode der folgenden Diode 14 angeschlossen ist. Eine Ecke der Diodenbrücke liegt an Masse und das Signal am Eingang NF wird an der gegenüberliegenden Ecke kapazitiv eingekoppelt. Um eine gute Trägerunterdrückung zu erzielen, wird das Oszillatorsignal über den Eingang HF über eine einstellbare Widerstandsbrücke eingekoppelt.

Das am Eingang NF in den Ringmodulator 9 eingespeiste Datensignal im Basisband oder modulierte Hilfsträgersignal wird im Rhythmus der Schwingung des Oszillatorsignals zwischen eigentlicher und invertierter Form umgeschaltet, wodurch die Trägerfrequenz durch die somit entgegengesetzten symmetrischen Spannungen aufgehoben wird. Eine in Figur 3 dargestellte Schaltung wird auch als Balance-Modulator bezeichnet.

Figur 4 zeigt schematisch einen alternativen Aufbau des Senders einer Transpondereinheit mit einem digitalem Ringmodulator.

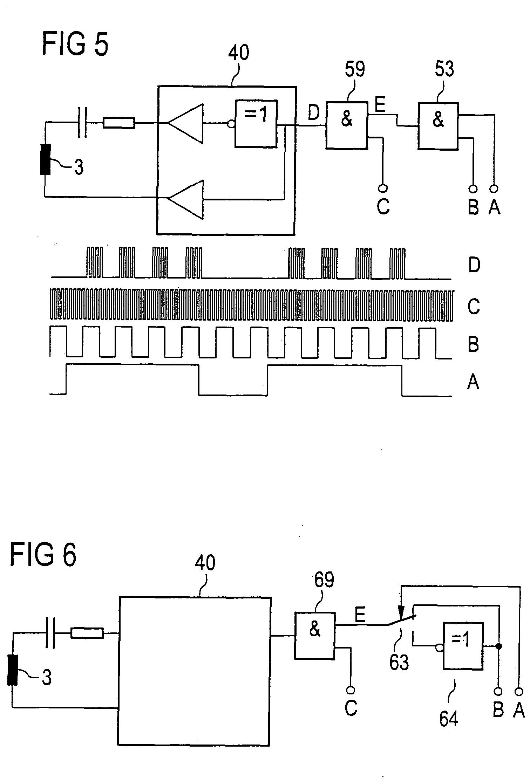

Unverändert gegenüber dem Aufbau gemäß Fig. 2 wird das binäre Datensignal A durch ein AND-Gatter 43 mit einem Hilfsträgersignal B verknüpft. Das verknüpfte Signal liegt an einem Ringmodulator 49 an. Als digitaler Ringmodulator 49 kann ein XOR-Glied verwendet werden. Im Unterschied zu dem Aufbau des Senders in Fig. 2 wird ein Trägersignal C nicht direkt an den Eingang des Ringmodulators 49 angelegt. Vielmehr wird das Trägersignal C in einem AND-Gatter 46 zunächst mit einem Datensignal A verknüpft. Diese Anordnung erzielt, wie unten genauer beschrieben, einen besseren Wirkungsgrad. Das Ausgangssignal des Ringmodulators 49 wird in einem Verstärker 40 verstärkt, bevor es über die Antenne 3 als Feld der Transpondereinheit ausgesendet wird. Die Signaltypen A bis C werden im Folgenden beispielhaft mit Bezug auf Fig. 5 näher beschrieben.

Figur 5 zeigt schematisch einen alternativen Sender einer Transpondereinheit ohne Ringmodulator.

Der Sender dient der Erzeugung eines amplitudenmodulierten Signals, wobei der dargestellte Sender vorzugsweise für binäre Datensignale A eingesetzt wird, wodurch ein OOK-Signal (on-off-keying) bzw. ein 2-ASK Signal entsteht. Das Datensignal A im Basisband (z.B. ein NRZ- oder Manchester-Signal), ein Hilfsträgersignal B (z.B. 848 kHz bei ISO/IEC 14443) und ein Trägersignal C (z.B. 13,56 MHz bei ISO/IEC 14443) werden mittels geeigneter Logikschaltungen 53, 59 AND-verknüpft, wobei zuerst die Signale A und B mittels der Schaltung 53 AND-verknüpft werden, woraus das Signal E entsteht. Das Signal E wird dann mit dem Signal C mittels der Schaltung 59 AND-verknüpft, woraus das Signal D entsteht. Funktional übernimmt hier die Schaltung 59 die Funktion des Modulators und die Schaltung 53 die Rolle des AND-Gatter 13 aus Fig. 2.

Das von einer Antenne 3 an ein Lesegerät ausgehende Signal D weist dabei ein Frequenzspektrum auf, das einem mittels Lastmodulation entstandenen Frequenzspektrum gleicht. Das Signal D kann mittels eines Verstärkers 40 ggf. noch verstärkt werden. Der Verstärker 40 kann beispielsweise ein Gegentaktverstärker mit digitalen Push-Pull Ausgangsverstärkern sein.

Figur 6 zeigt schematisch eine leichte Abwandlung des Senders der Figur 5.

In dem Sender gemäß Figur 5 wird ein amplitudenmodulierten Hilfsträgersignals erzeugt, dagegen erzeugt der in Figur 6 gezeigte Sender ein phasenmoduliertes Hilfsträgersignal. Dieser Sender, wie auch der Sender der Figur 5, wird in einer erfindungsgemäßen Transpondereinheit vorzugsweise nur dann eingesetzt, wenn das Datensignal A ein binäres Signal ist. Dementsprechend erzeugt der dargestellte Sender ein BPSK-Signal (2-PSK, Binary Phase Shift Keying). Dabei werden ein Hilfsträgersignal B (z.B. 848 kHz bei ISO/IEC 14443) und ein Trägersignal C (z.B. 13,56 MHz bei ISO/IEC 14443) mittels der Schaltung 69 AND-verknüpft. Das Datensignal A im Basisband (z.B. NRZ- oder Manchester-Signal) schaltet dabei - mit Hilfe eines Schalters 63 und eines Inverters 64 - das Hilfsträgersignal B zwischen einem invertierten und einem nicht-invertierten Zustand um. Dies entspricht in der Wirkung einer Phasenmodulation um 180° (BPSK, binäre Phasentastung).

Ein Signal D, welches durch eine einfache AND-Verknüpfung des phasenmodulierten Hilfsträgersignals E mit dem Trägersignal C entsteht und mittels der Antenne 3 ausgesendet wird, weist vorteilhafterweise ein Frequenzspektrum auf, welches dem einer Lastmodulation mit einem BPSKmodulierten Hilfsträger gleicht.

Die nachfolgende Tabelle zeigt einen Überblick über die logische Verknüpfung der Signale, den Stromverbrauch und die Reichweite für unterschiedliche digitale Modulationsschaltungen (Trägerfrequenz TF = 13,56MHz; Hiflsträgerfrequenz HT = 868kHz; Modulationssignal MS im Basisband und HIB = High Baudrates nach ISO/IEC14443: 212, 424 und 868 kBit/ s für Typ A und B identisch).

| Modulationsschaltung | Logische Verknüpfung | Stromverbrauch | Reichweite |
|---|---|---|---|
| ISO/IEC 1443 A (Manchester Code, 106 kBit/ s, ASK) | | | |
| Digitaler Ring-modulator XOR | (HT ∩ MS) XOR TF | 100% | 100% |
| Optimierter Ringmodulator | (HT ∩ MS) XOR (TF ∩ MS) | 50% | 100% |
| ASK-Modulator | TF ∩ (HT ∩ MS) | 25% | 83% |

| ISO/IEC 14443 B (NRZ, 106 kBit/s, BPSK) und HIB | | | |
|---|---|---|---|
| Digitaler Ringmodulator XOR | ((HT ∩ MS) ∪ (HT\ ∩ MS\)) XOR TF | 100% | 100% |
| ASK-Modulator | ((HT ∩ MS) ∪ (HT\ ∩ MS\)) ∩ TF | 50% | 83% |

Bei der Datenübertragung von einem Transponder zum Lesegerät wird nach ISO/IEC 14443-3/Typ A bei der Initialisierungs-Bitrate von 106 kBit/s ein ASK-modulierter Hilfsträger (OOK, on-off-keying: HT n MS) eingesetzt. Wird dieses Signal entsprechend dem erfindungsgemäßen Verfahren aktiv nachgebildet, so können die benötigten Seitenbänder am effektivsten mit einem Ringmodulator erzeugt werden. Die hierbei entstehende Zweiseitenbandmodulation (DSB) sollte die besten Ergebnisse hinsichtlich Kommunikationsreichweite zeigen, da dabei die Trägerfrequenz (13,56 MHz) unterdrückt wird und die verfügbare Energie in den Seitenbändern bereit gestellt wird.

Würde man einfach ein XOR-Glied als digitalen Ringmodulator in der Schaltungsanordnung gemäß Figur 2 verwenden, so erhielte man eine schlechte Trägerunterdrückung bei dem untersuchten Signal nach ISO/IEC 14443 - Typ A. Dies rührt vor allem daher, dass das Trägersignal auch in den Modulationspausen, also zu 100% der Zeit, ausgesendet wird und zu einer unnötig hohen Stromaufnahme.

Bei der Verwendung eines ASK-modulierten Hilfsträgers (OOK, z. B. 14443/TypA) ist es in jedem Fall sinnvoll, das zur Einspeisung in den digitalen Ringmodulator vorgesehene Trägerfrequenzsignal TF mit dem Basisbandsignal MS mittels einer logischen UND-Verknüpfung zu verknüpfen (TF ∩ MS) und das daraus resultierende Signal in den einen Eingang des digitalen Ringmodulators einzuspeisen. Hierdurch ergibt sich eine Reduzierung der Stromaufnahme auf 50%, verglichen mit dem einfachen Ringmodulator. Das HF-Signal wird dann nur zu den Zeitpunkten ausgesendet, zu denen auch der Hilfsträger eingeschaltet ist. Die Kommunikationsreichweite dieser Schaltung entspricht exakt der Reichweite des einfachen digitalen Ringmodulators. Die Trägerfrequenz ist nun im Ausgangsspektrum deutlich unterdrückt, so wie es von einem Ringmodulator zu erwarten ist. Eine derartige Schaltungsanordnung wurde bereits mit Bezug auf Figur 4 beschrieben.

Der ASK-Modulator wird, wie in Fig. 4 gezeigt, durch eine UND-Verknüpfung aller Eingangssignale realisiert. Das Ausgangssignal besteht nur mehr aus Trägerfrequenzbursts im Takt der Hilfsträgerfrequenz und des Modulationssignals im Basisband. Hinsichtlich der Reichweite müssen Einbußen hingenommen werden, die Reichweite sinkt auf 83 % verglichen mit dem Ringmodulator. Die Stromaufnahme hingegen beträgt nur noch 25 % verglichen mit dem einfachen Ringmodulator. Diese Modulationsschaltung erscheint somit als besonders vorteilhaft, da der Energieverbrauch der Schaltung mit geringen Abstrichen in der Reichweite auf 25 % gesenkt werden kann.

Für ein externes HF-Interface - beispielsweise mit der später genauer beschriebenen S2C-Schnittstelle - sollte bevorzugt ein ASK-Modulator eingesetzt werden, da hierbei die Leistungsaufnahme am geringsten ist. Wird das HF-Interface in einen Smart-Card-Chip integriert, oder wird ein HF-Interface verwendet, welches das Signal (TF ∩ MS) bereit stellt, so wird bei ausreichender Energie bevorzugt der optimierte Ringmodulator eingesetzt werden. Soll dagegen Energie gespart werden, so kann auch hier der ASK-Modulator eingesetzt werden.

Bei einer Datenübertragung von einem Transponder zum Lesegerät nach ISO/IEC 14443-3/Typ B, sowie bei Baudraten von 212 kBit/s und höher, für die beiden Interfacetypen A und B wird ein BPSK-modulierter Hilfsträger (Binary Phase Shift Keying) eingesetzt.

Bei der aktiven Nachbildung eines solchen Signals erbringt auch hier ein Ringmodulator die besten Ergebnisse hinsichtlich Kommunikationsreichweite. Der digitale Ringmodulator zeigt ein gutes Verhalten hinsichtlich der Trägerunterdrückung. Die relative Stromaufnahme beträgt jedoch 100%, da während der gesamten Dauer eines Bits HF-Energie abgestrahlt wird.

Der ASK-Modulator zeigt ein schlechtes Verhalten hinsichtlich der Trägerunterdrückung. Die Stromaufnahme sinkt gegenüber dem Digitalen Ringmodulator auf 50%.

Für BPSK- oder auch FSK-modulierte Hilfsträger soll bevorzugt ein ASK-Modulator eingesetzt werden, da der Sender hierbei die geringste Stromaufnahme benötigt. Steht ausreichend Energie zur Verfügung, kann jedoch auch der einfache digitale Ringmodulator eingesetzt werden. Ein optimierter digitaler Ringmodulator ist nicht möglich, da bei PSK- oder FSK-Modulation des Hilfsträgers, dieser während der gesamten Dauer eines Bits gesendet werden muss.

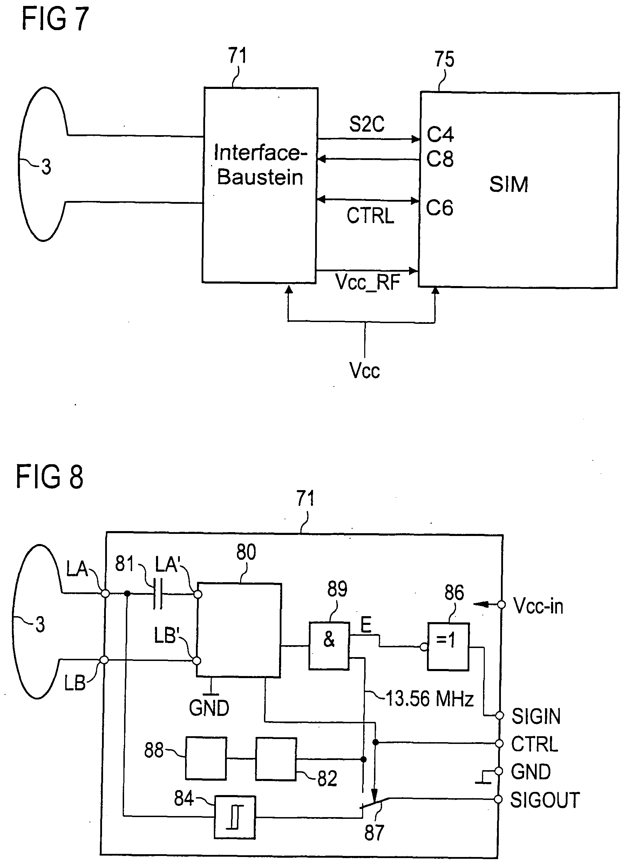

Im Folgenden wird mit Bezug auf die Figuren 7 bis 11 auf vorteilhafte Möglichkeiten eingegangen, eine erfindungsgemäße Schaltung in Verbindung mit bekannten Komponenten zu verwirklichen.

Es gibt Smart-Card-Chips, die eine von der Firma Philips definierte, sogenannte S²C-Schnittstelle aufweisen, um den Smart-Card-Chip mit einer HF-Schnittstelle eines NFC-Geräts zu verbinden. Derartige Smart-Card-Chips verfügen zwar über Hardwaremittel zum Erzeugen und Dekodieren von auf einer ISO/IEC 14443 Schnittstelle benötigten Signalen (Miller Code, Manchester Code, Hilfsträger 848 kHz). Jedoch besitzt ein solcher Chip keine eigene HF-Schnittstelleneinheit.

Figur 7 zeigt schematisch eine erfindungsgemäße Transpondereinheit, gebildet durch einen an eine Antenne 3 angeschlossenen Interfacebaustein (Schnittstelleneinheit) 71 und einen Chip 75 mit einer geeigneten Schnittstelle, beispielsweise einer S²C-Schnittstelle. Eine derartige Transpondereinheit kann beispielsweise in einem Mobilfunkgerät mit Hilfe der SIM-Karte als Chip 75 gebildet werden, die dann vorzugsweise über eine oder mehrere unbelegte Kontaktflächen (C6 und/oder C4, C8) der SIM-Karte mit dem Interface-Baustein 71 verbunden ist.

Sowohl der Interface-Baustein 71 als auch der Chip 75 können Ihre Versorgungsspannung von dem Gerät beziehen, in welchem sie vorzugsweise reversibel angeordnet sind. Der Interfacebaustein 71 kann in einem zweiten Betriebsmodus als gewöhnlicher Transponder agieren und den Chip mit einer Betriebsspannung Vcc_RF versorgen.

Figur 8 zeigt schematisch genaueren Aufbau eines Interfacebausteins für einen Chip mit S²C-Schnittstelle.

Der Interfacebaustein 71 ist mit einem Signaleingang SIGIN und einem Signalausgang SIGOUT ausgestattet, um Signale von der Antenne zu dem Chip (nicht gezeigt) und vom Chip, welcher das modulierte Hilfsträgersignal generiert, zu der Antenne zu leiten. Ein Signal an SIGOUT besteht aus einem 13,56 MHz TTL-Signal, welches gegebenenfalls ein Modulationssignal eines entfernten Lesegerätes enthält.

Der Interfacebaustein 71 umfaßt einen Verstärker 80, ein AND-Gatter 89, einen Oszillator 88, einen Frequenzteiler 82, einen Signalformer 84 und einen Schalter 87. Der Verstärker 80 kann beispielsweise ein Gegentaktverstärker mit (digitalen) Push-Pull Ausgangsverstärkern (nicht gezeigt) sein. Des weiteren besitzt der Interfacebaustein zwei Antennenanschlüsse LA und LB und eine Serienkapazität 81. Darüber hinaus besitzt der Interfacebaustein 71 Anschlüsse Vcc-in und GND zur Energieversorgung und einen Steuereingang CTRL, um zwischen einem Sende- und Empfangsbetrieb des Interfacebausteins mittels des Schalters 87 umzuschalten.

Das extern modulierte Hilfsträgersignal wird über eine geeignete Schnittstelle (z.B. S2C Interface von Philips) an den Signaleingang SIGIN des Interfacebausteins 71 geführt und dort wie nachfolgend beschrieben weiter verarbeitet. Das Hilfsträgersignal ist beispielsweise ein 848kHz TTL-Signal, welches ASK (ISO/IEC 14443 A, Manchester Code) oder BPSK (ISO/IEC 14443 B, NRC Code) moduliert ist.

Befindet sich der Interfacebaustein im Sendebetrieb, d.h. es findet eine kontaktlose Datenübertragung an ein externes Lesegerät oder ein NFC-Gerät statt, so wird am Signaleingang SIGIN durch den Smart-Card-Chip ein moduliertes Hilfsträgersignal eingespeist und optional in einem Inverter 86 invertiert. Das invertierte Signal E wird im AND-Gatter 89 als Trägerfrequenzmodulator mit einem 13,56 MHz Trägerfrequenzsignal verknüpft und dem Verstärker 80 zugeführt.

Die Antenne 3 und die Serienkapazität 81 bilden einen Reihenschwingkreis, welcher mit den Ausgängen LA' und LB' des Verstärkers 80 verbunden ist, so dass der im Resonanzfall fließende HF-Strom im Antennenschwingkreis nur durch die ohmschen Widerstände in den Leitungen und im Verstärker 80 begrenzt wird. Dadurch wird eine größtmögliche Sendeleistung des Interfacebausteins erreicht.

Ferner kann dem Smart-Card-Chip über den Schalter 87 im Sendebetrieb über den Ausgang SIGOUT ein konstantes 13,56 MHz Taktsignal vom Oszillator 88 zugeführt werden, sofern er ein solches (externes) Taktsignal zum Betrieb benötigt, um einen genauen Takt (Timing) einzuhalten. Wie bereits beschrieben, ist dies für eine Kommunikation nach dem Standard ISO 14443 Typ A notwendig.

Im Empfangsbetrieb wird dem Smart-Card-Chip über den Schalter 87 und den Ausgang SIGOUT ein digitalisiertes, von der Antenne 1 abgegriffenes Empfangssignal zugeführt. Der Signalformer 84 funktioniert dabei als Verstärker, um auch schwache Signale empfangen zu können, und als Schwellenschalter, um am Ausgang des Signalformers ein digitales Ausgangssignal zur Verfügung zu stellen. Beispielsweise kann als Schwellenschalter ein Schmitt-Trigger eingesetzt werden, der abhängig vom Über- bzw. Unterschreiten eines vorbestimmten Schwellenwerts einen eindeutigen High- bzw. Low-Pegel ausgibt.

Über den Steuereingang des Gegentaktverstärkers 80 werden die Push-Pull-Ausgänge der Ausgangstreiber (siehe Verstärkereinheiten in Fig. 5) auf GND geschaltet, so dass aus der Antenne 3 und dem Kondensator 41 ein Parallelschwingkreis entsteht. Um Energie zu sparen, kann der Verstärker 80 im Empfangsbetrieb des Interfacebausteins in einen Stromsparmodus geschaltet werden.

Der Oszillator 88 erzeugt das im Sendebetrieb benötigte 13,56 MHz Trägerfrequenzsignal. Kann der Oszillator im Empfangsbetrieb nicht abgeschaltet werden, da sein Einschwingvorgang ggf. zu lange dauert, so wird der Oszillator im Empfangsbetrieb des Interfacebausteins bevorzugt auf einer Vielfachen N des Trägerfrequenzsignals (z.B. 27,120 MHz) betrieben, um das ggf. schwache Empfangssignal nicht durch Übersprechen zu stören. Im Sendebetrieb kann dann durch Teilung des Oszillatorsignals durch N mittels eines optionalen Teilers 82 das benötigte 13,56 MHz Signal erzeugt werden.

Der Steuersignaleingang CTRL für ein Steuersignal ist optional, da sich das Steuersignal zum umschalten des Betriebsmodus auch aus dem Eingangssignal am Signaleingang SIGIN ableiten lässt. Beispielsweise kann ein monostabiles Zeitglied (Monoflop) aus dem Eingangssignal an SIGIN ein Steuersignal erzeugen. Es gibt nur dann ein aktives Eingangssignal, wenn der Chip Daten senden möchte. Triggert man nun mit der ersten Flanke des Eingangssignals das monostabile Zeitglied, erhält man als Ausgang des Zeitgliedes ein Steuersignal. Insbesondere sollte das Zeitglied nachtriggerbar realisiert werden und so eingestellt sein, dass es etwa nach einer Zeit von der 1 bis 2-fachen Bitdauer (maximal der FGT, Frame Guard Time) in den Ausgangszustand zurückfällt. Somit steuert das Steuersignal wieder einen Empfangsbetrieb an, wenn keine Daten mehr gesendet werden.

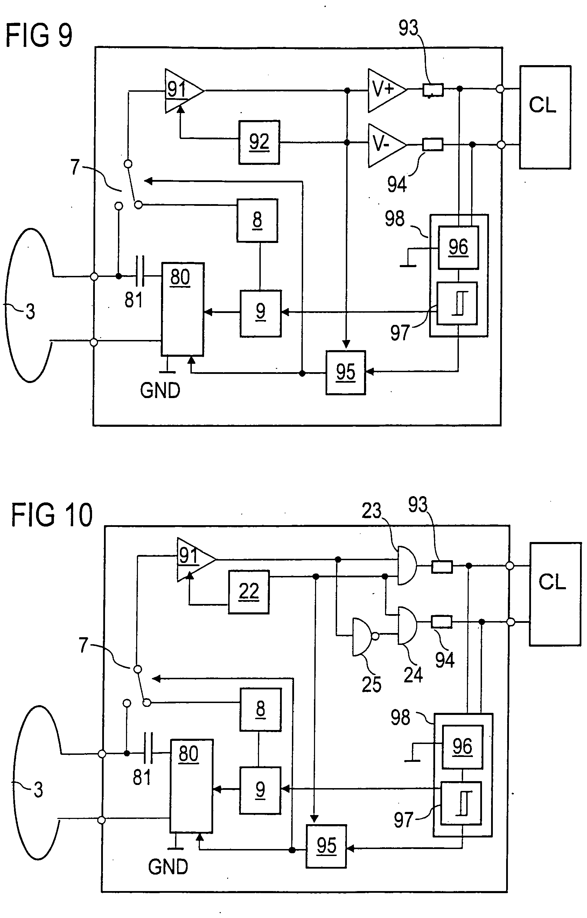

Figur 9 zeigt schematisch den Aufbau eines Interfacebausteins zur Anbindung an einen Chip mit herkömmlicher HF-Schnittstelle.

Die erfindungsgemäße aktive Transpondereinheit verfügt über einen Empfangszweig und einen Sendezweig. Der Empfangszweig besteht aus einer Antenne 3, einem Eingangsverstärker 91, einer automatischen Verstärkungsregelung 92, sowie einem Verstärker der bevorzugt als Gegentaktverstärker (V+, V-) ausgeführt ist. Ferner ist ein Transponderchip CL über seine Antennenanschlüsse mit dem Gegentaktverstärker verbunden.

Bei dem Transponderchip CL handelt es sich um einen herkömmlichen RFID-Chip entsprechend dem Stand der Technik. Er wird normalerweise an seinen Anschlüssen mit einer Antenne, z. B. in einer Chipkarte, verbunden. Ferner ist der Transponderchip CL so ausgelegt, dass die Datenübertragung von der Transpondereinheit zu einem Lesegerät mittels Lastmodulation durchgeführt wird. Dies ist bei den üblichen, auf 13,56 MHz oder auch 125 kHz eingesetzten RFID-Systemen ohnehin fast immer der Fall (z. B. ISO/IEC 14443, ISO/IEC 15693, ISO/IEC 18000-3).

Der Sendezweig besteht aus einer Demodulationsschaltung 97, einer Modulatorschaltung 9, einem Oszillator 8 (z. B. 13.56 MHz), einer Steuerung 95, sowie einem Sendeverstärker 80 verbunden mit der Antenne 3. Die Demodulationsschatung 98 kann zum Beispiel aus einem Gleichrichter 96 und einem Schwellwertschalter 97 bestehen.

Im Empfangsbetrieb wird in der Antenne 3 durch das magnetische Feld eines entfernten RFID-Lesegerätes eine Spannung induziert. Zusammen mit dem Kondensator 81 bildet die Antenne 3 einen Parallelschwingkreis, dessen Resonanzfrequenz in etwa der Sendefrequenz des RFID-Lesegerätes entspricht. Die so am Schwingkreis anstehende Spannung wird über den Schalter 7 dem Eingangsverstärker 91 zugeführt. Über eine Verstärkungsregung 92 wird nun der Verstärkungsgrad des Eingangsverstärkers 91 so nachgeführt, dass die Ausgangsamplitude der vom Eingangsverstärker 91 verstärkten Spannung weitgehend konstant bleibt. Die Zeitkonstante der Regelung wird dabei bevorzugt so eingestellt, dass die Ausgangsspannung des Verstärkers 91 zwar bei unterschiedlicher Entfernung zum Lesegerät (d. h. unterschiedlich hohe Induktionsspannung in der Spule 3 konstant bleibt, Modulationssignale hingegen (z. B. 10% ASK mit 106 kBit/s) durch eine zu schnelle Regelung nicht unterdrückt werden.

Das Ausgangssignal des Verstärkers 91 wird einem weiteren Verstärker, bevorzugt einem Gegentaktverstärker (V+, V-) zugeführt. Das Ausgangssignal des Gegentaktverstärkers wird über (wenigstens) einen Serienwiderstand 93 den Anschlüssen des kontaktlosen RFID-Chips CL zugeführt. Die Amplitude des Ausgangssignals des Gegentaktverstärkers V+/V- ist dabei so gewählt, dass der RFID-Chip CL durch das Ausgangssignal mit ausreichend Energie zum Betrieb versorgt werden kann.

Der RFID-Chip CL erhält somit ein Signal, welches im Zeitverlauf dem Signal des entfernten Lesegerätes entspricht und sich diesem in der Amplitude proportional verhält. Der RFID-Chip ist damit auch in der Lage, von diesem Lesegerät gesendete Kommandos zu empfangen, auszuwerten und ggf. abzuarbeiten.

Sobald der RFID-Chip CL ein Kommando empfangen und abgearbeitet hat, versucht er eine Antwort an das entfernte Lesegerät zurückzusenden. Hierzu verwendet der RFID-Chip üblicherweise eine Lastmodulation, d. h. ein zusätzlicher Parallelwiderstand im Chip wird im Takt des Modulationssignals ein und ausgeschaltet. Dies führt zu messbaren Schwankungen im Spannungsabfall an den Widerständen 93, 94. Mit anderen Worten, die HF-Wechselspannung an den Anschlüssen wird in der Amplitude moduliert. Durch die Demodulatorschaltung 98 wird dieses amplitudenrnodulierte Wechselspannungssignal demoduliert und das ursprüngliche Modulationssignal somit weder rekonstruiert.

Die Demodulationsschaltung 98 besteht im einfachsten Fall aus einem Brückengleichrichter 96 und einem Schellwertschalter 97. Eine weitere Möglichkeit besteht darin die Demodulationsschaltung aus einem A/D-Wandler und einer nachfolgenden Signalverarbeitung (z. B. einem DSP-Prozessor mit Software) zu realisieren. Bei RFID- Systemen die mit Lastmodulation mit Hilfsträger arbeiten, ist auch ein Ausfiltern eines durch die Lastmodulation entstandenen Hilfsträgerbandes (Oberes Hilfsträgerband 13.56 MHz + f_{HT}, Unteres Hilfsträgerband -13,56 Mhz - f_{HT}) und eine nachfolgende Verarbeitung möglich.

Das durch die Demodulationsschaltung 97 rekonstruierte Modulationssignal wird auch einer Steuerung 95 zugeführt. Diese schaltet die erfindungsgemäße Schaltung mit der ersten Flanke des Modulationssignal möglichst verzögerungsfrei in einen Sendebetrieb um, so dass die vom RFID-Chip CL erzeugten Daten auch an das entfernte Lesegerät übertragen werden können. Hierzu wird zunächst der Schalter 7 von der Antenne 3 auf den Oszillator 8 (13.56 MHz) umgeschaltet. Dies ist notwendig, um den RFID-Chip CL auch weiterhin mit einer Wechselspannung der richtigen Frequenz versorgen zu können. Gleichzeitig wird durch die Steuerung 95 der Verstärker 80 aktiviert.

Das rekonstruierte Modulationssignal sowie das Signal des Oszillators 8 wird der Modulatorschaltung 9 zugeführt. Die genaue Funktion einer solchen Schaltung ist bereits ausführlich beschrieben worden. Das Ausgangssignal der Modulatorschaltung 9 wird dem Verstärker 80 zugeführt und über die Antenne 3 an das entfernte Lesegerät gesendet.

Wird der Steuerung 95 für eine definierte Zeit t kein Modulationssignal mehr zugeführt, so ist erfindungsgemäß vorgesehen, das diese die erfindungsgemäße Schaltung automatisch wieder in den Empfangsbetrieb zurückschaltet. Die Dauer der Zeit t wird zweckmäßigerweise zwischen der
Dauer eines Bits (ISO 14443-A: ∼10 µs) und der Frame Delay Time (minimale Zeit bis zum nächsten Signal eines Lesegerätes, ISO 14443-A: ∼ 86 µs) eingestellt.

Ein wichtige Rolle kommt dem an der Steuerung 95 vom Empfangszweig (91, 92, V+, V-) eingehenden Signal zu. Sendet ein Lesegerät an die Transpondereinheit Daten mittels einer Amplitudenmodulation des ausgesendeten Feldes (z. B. 150/IEC 14443-A: 100% ASK, ISO/IEC 14443-B: 10% ASK) so wird diese Modulation auch an den Transponderchip CL weitergeleitet. Die Demodulationsschaltung 98 kann dabei möglicherweise nicht zwischen einem Modulationssignal von einem Lesegerät und einer Lastmodulation des RFID-Chips CL unterscheiden, da sich beide als Amplitudenmodulation des HF-Signals an den Anschlüssen des RFID-Chips CL äußern.

Eine Lastmodulation des Transponderchips CL ist jedoch ausschließlich an den Anschlüssen, ein Modulationssignal des Lesegerätes hingegen bereits im Empfangszweig (91, 92, V+, V-) der erfindungsgemäßen Schaltung zu erkennen. Es ist daher vorgesehen, die erfindungsgemäße Schaltung nur dann in den Sendebetrieb zu schalten, wenn ein Modulationssignal (Amplitudenmodulation) ausschließlich an den Anschlüssen des RFID-Chips CL, nicht jedoch im Empfangszweig detektiert werden kann, da es sich nur in diesem Fall um eine Lastmodulation handelt. In Figur 9 wird dies durch das in die Steuerung 95 vom Empfangszweig (91, 92, V+, V-) eingespeiste Signal angedeutet.

Eine zweite Möglichkeit zur Unterscheidung besteht in der Auswertung der Modulationstiefe des Signals an den Anschlüssen des RFID-Chips. Durch Lastmodulation wird eine Modulationstiefe kleiner 100% erreicht. Im Laboraufbau wurden ca. 25% ermittelt, andere Werte ergeben sich aus Kombination von unterschiedlichen Widerständen 93, 94 mit verschiedenen RFID-Chips CL. Es ist daher vorgesehen, die Unterscheidung zwischen der Lastmodulation und der Modulation des Lesegerätes durch das Ermitteln der Modulationstiefe anhand von vorgegebenen Schaltschwellen vorzunehmen. Liegt die Stärke des Modulationssignals über einer ersten, hohen Schwelle, so liegt ein Signal des Lesegerätes vor. Ist das Modulationssignal dagegen kleiner als die erste Schaltschwelle und optional größer als eine zweite Schaltschwelle, wird erkannt, dass eine Lastmodulation vorliegt. Eine Umschaltung in den Sendebetrieb erfolgt, wenn die Modulation durch eine Lastmodulation hervorgerufen wurde.

Figur 10 zeigt schematisch den Aufbau eines vereinfachten Interfacebausteins zur Anbindung an einen Chip mit herkömmlicher HF-Schnittstelle.

In dieser Ausführungsform wird anstelle eines linearen Verstärkers ein TTL-Treiber in Gegentaktschaltung 23, 24, 25 eingesetzt. Ein Modulationsdetektor 22 dient der Erkennung einer vom Lesegerat gesendeten Amplitudenmodulation und schaltet erfindungsgemäß während der Modulationspulse des Lesegerätes, das eine 100% ASK-Modulation ausführt, beide Ausgänge der Gegentaktschaltungen 23, 24 auf einen Low-Pegel. Verwenden dagegen der Transponderchip CL und das Lesegerät eine 10% - ASK-Modulation für die Datenübertragung (beispielsweise gemäß ISO/IEC 14443-B) so ist vorgesehen, dass der Modulationsdetektor 22 im Takt der empfangenen Modulationssignale zwischen zwei Gegentaktschaltungen mit unterschiedlichem Pegel des Ausgangssignals umschaltet.

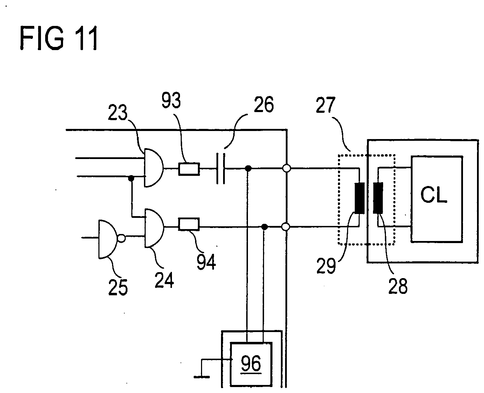

Eine weitere Möglichkeit der Ankopplung des Transponderchips CL besteht in einer kapazitiven oder auch induktiven Ankopplung. Figur 11 zeigt den relevanten Ausschnitt eines vereinfachten Interfacebausteins zur induktiven Anbindung an einen Transponder.

Für eine induktive Ankopplung verfügt die Schaltung über eine zusätzliche Antenne 29, welche mittels eines Kondensators 26 in Resonanz zur Arbeitsfrequenz (z. B. 13,56 MHz) gebracht werden kann. Ein Transponder, bestehend aus einem Transponderchip CL und einer Antenne 28 wird in unmittelbarer Nähe der Antenne 29 positioniert, so dass eine möglichst gute magnetische Kopplung zwischen den Antennen 28 und 29 erreicht werden kann. Auch bei dieser Anordnung kann eine Lastmodulation des Transponderchips CL leicht detektiert werden.

Der induktiv koppelbare Interfacebaustein und eine damit verbundene weitere Antenne (siehe Bezugszeichen 3 in Fig. 10) kann in einem Endgerät angeordnet sein. Die Reichweite eines gewöhnlichen Transponders kann mit Hilfe eines solchen Endgerätes erhöht werden. Der Besitzer eines Mobilfunkgerätes könnte beispielsweise eine Kommunikation zwischen seinem Transponder und einem ungünstig angeordneten oder aus anderen Gründen nicht komfortabel erreichbaren Lesegerät aufbauen, indem er den Transponder an sein erfindungsgemäß mit einem induktiv koppelbaren Interfacebaustein versehenes Mobilfunkgerät hält.

Die nachfolgende Tabelle zeigt Ergebnisse durchgeführter Reichweitenmessungen:

| Transponder | Antennengröße | Reichweite |
|---|---|---|
| Kontaktlose Chipkarte | 80 x 50 mm² | 7 cm |
| Optimierter digitaler Ringmodulator XOR | 80 x 50 mm² | 50 cm |
| Optimierter digitaler Ringmodulator XOR | 20 x 20 mm² | 25 cm |

Wie aus der Tabelle abzulesen ist, werden mit dem erfindungsgemäßen Verfahren auch bei sehr kleinen Antennen große Kommunikationsreichweiten erzielt.

Es wurde festgestellt, dass kleine Antennen, z.B. in einer SIM-Karte mit eigener Antenne (ca. 15x25 mm²), mit einer herkömmlichen Lastmodulation nur sehr geringe Lesereichweiten erreichen. Häufig ist es sogar unmöglich, mit einem kontaktlosen Lesegerät zu kommunizieren, wenn die SIM-Karte mit Antenne beispielsweise in einem Mobilfunkgerät angeordnet ist. Wird einer der erfindungsgemäßen Sender in einem mobilen Endgerät eingesetzt wird nicht nur die Reichweite deutlich erhöht. Zudem kann vorteilhaft ausgenutzt werden, dass mobile Endgeräte wie Mobilfunkgeräte, PDAs, etc. eine eigene Energieversorgung (Akku) besitzen, welche auch zur Versorgung einer erfindungsgemäßen Schaltung verwendet werden kann.

Die beschriebenen Lösungen können als Alternative zum Einsatz von NFC-Einheiten gesehen werden, die im aktiven Modus des NFC-Sytems abwechselnd ihr Feld aussenden. Die vorliegenden Lösungen können aber auch als vorteilhafte Ergänzung für den passiven Modus in einem NFC-System dienen.

So könnte eine NFC-Einheit angepasst sein, in ihrem passiven Modus in der Rolle ("Being Card"), in welcher die NFC-Einheit eine Lastmodulation ausführen soll, sich im Sinne der vorliegenden Lösungen zu verhalten. Die NFC-Einheit könnte beispielsweise stets als aktiv ein eigenes Feld aussendende Komponente agieren. Ebenso könnte die NFC-Einheit aber auch zwischen einem ersten Untermodus, der einer herkömmlichen Lastmodulation entspricht, und einem aktiv sendenden, zweiten Untermodus, in welchem die Lastmodulation vorgetäuscht wird, unterscheiden und gegebenenfalls umschalten. Eine derart verbesserte NFC-Einheit kann mit Hilfe des geänderten passiven Betriebsmodus auch mit gewöhnlichen RFID-Lesegeräten über eine höhere Reichweite hinweg kommunizieren. Da NFC-Einheiten für ein selbständiges Senden in ihrem herkömmlichen aktiven Modus bereits bestimmte Einheiten - wie beispielsweise einen Oszillator, einen Verstärker und eine Steuerung - aufweisen werden, sind verhältnismäßig wenige Modifikationen einer NFC-Schaltung erforderlich, um eine Schaltung im Sinne der vorliegenden Anmeldung in einer NFC-Einheit zu realisieren.

Teilaspekte der einzelnen Ausführungsformen sind untereinander kombinierbar, wie es anhand der Beispiele in den nachfolgenden Absätzen deutlich wird.

Eine geeignete Modulatorschaltung kann bezogen auf den Anwendungsfall in beispielsweise den oben genannten Komponentenkombinationen gewählt werden. Auch die verschiedenen gezeigten Arten von Hilfsträgermodulatoren und Trägerfrequenzmodulatoren können in einem Modulator theoretisch beliebig kombiniert werden. Ob ein passiver Betriebsmodus vorgesehen wird sowie unter welchen Bedingungen und wie eine Umschaltung erfolgt, ist ebenfalls abhängig vom Anwendungsfall wählbar.

Die einzelnen funktionalen Komponenten der Transpondereinheit: Antenne, Schnittstelleneinheit, Chip und gegebenenfalls Spannungsversorgungseinheit können in verschiedensten Kombinationen separat voneinander oder gemeinsam in einer Einheit integriert angeordnet sein. Eine erfindungsgemäße Transpondereinheit kann beispielsweise als besonders ausgebildeteter Transponder, in einem tragbaren Datenträger, insbesondere einer Chipkarte, gebildet sein, der optional eine Batterie aufweist. Eine tragbarer Datenträger, insbesondere eine SIM-Karte, mit Chip und Schnittstelleneinheit kann in einem mobilen Endgerät mit einer externen Spannungsquelle und/oder einer externen Antenne verbunden werden. Die Schnittstelleneinheit kann in einem Endgerät angeordnet, mit einer eigenen oder einer externen Antenne verbunden sein, und mit einem Chip kommunizieren, der reversibel oder fest im Endgerät oder temporär am Endgerät angeordnet ist.

Mit Bezug auf die Fig. 13 bis 19 werden im Folgenden Verbesserungen beschrieben, die insbesondere für den in Fig. 12 gezeigten Anwendungsfall vorteilhaft sind. In Fig. 12 wird eine mit einem Endgerät verbindbare Massenspeicherkarte als Transpondereinheit gezeigt. Als analoge Anwendungsfälle sind folgende tragbaren Datenträger zu sehen: eine SIM-Karte, ein Sicherheitsmodul für ein Zahlungsverkehrsterminal, ein Sicherheitsmodul (TPM - Trusted-Platform-Modul) für einen Computer oder ein mit einem Endgerät verbindbarer USB-Token, sofern sie ebenfalls erfindungsgemäß angepasste Mittel zur drahtlosen Datenkommunikation aufweisen. Daher wird im Folgenden zumindest teilweise der Oberbegriff "tragbarer Datenträger" verwendet und auf die Darstellung der optional vorhandenen Komponenten Massenspeicher 122 und zugeordnete Steuereinheit 124 verzichtet.

Fig. 13 zeigt den Aufbau des Interfacebausteins 121 aus Fig. 12. Der Interface-Baustein 131 umfasst einen Verstärker 130, eine Signalverarbeitungseinheit 136, eine Schaltungseinheit 134 für den herkömmlichen passiven Betriebsmodus, die typischerweise einen Gleichrichter, einen Demodulator und einen Lastmodulator umfaßt, und eine Auswahleinheit 135. Der Interface-Baustein erhält eine externe Versorgungsspannung Vcc-MMC über einen Eingang Vcc_MMC und stellt eine eigene Versorgungsspannung gegebenenfalls über einen Ausgang Vcc_out bereit.

Die Massenspeicherkarte 120 aus Fig. 12 kann somit aus zwei möglichen Energiequellen versorgt werden. Sie erhält ihre Versorgungsspannung entweder von der Energieversorgung 128 des Endgeräts 127 (VCC-MMC) oder aus einem externen Hochfrequenzfeld (VCC-HF).

Die in Fig. 13 gezeigte Auswahleinheit 135 wertet aus, ob eine Versorgungsspannung VCC-MMC vorliegt und schaltet ein internes Auswahlsignal (e-nable) des Interface-Bausteins 131 vorzugsweise abhängig von dem Vorliegen der durch das Endgerät bereit gestellten Spannungsversorgung. Abhängig von dem internen Auswahlsignal verwendet der Interface-Baustein 138 entweder einen passiven Betriebsmodus (passive Schnittstelleneinheit 134 aktiviert und Verstärker 130 sowie Signalverarbeitung 136 deaktiviert) oder den erfindungsgemäßen aktiven Betriebsmodus (passive Schnittstelleneinheit 134 deaktiviert und Verstärker 130 sowie Signalverarbeitung 136 aktiviert). Die Auswahleinheit 135 kann des weiteren auswerten, ob die externe Spannungsversorgung Vcc-MMC in ausreichender Höhe vorliegt und gegebenenfalls sogar deren zeitliche Entwicklung auswerten.

Befindet sich die Massenspeicherkarte 120 aus Fig. 12 in dem Endgerät 127, bezieht es seine Versorgungsspannung aus der Energieversorgung 128. Die Auswahleinheit 135 schaltet den Verstärker 130 und die Signalverarbeitungseinheit 136 ein, um die zu übertragenden Daten in dem aktiven Betriebsmodus zu senden.

Ist die Massenspeicherkarte 120 dagegen nicht in einem Endgerät eingesetzt oder aber bekommt sie nicht ausreichend Energie von einem Endgerät geliefert, erfolgt die Versorgung der Massenspeicherkarte 120 aus der Energie des empfangenen Hochfrequenzfeldes. Die Auswahleinheit 135 schaltet den Verstärker 130 und die Signalverarbeitungseinheit 136 aus und aktiviert die Kommunikationseinheit 134, um beispielsweise eine herkömmliche Lastmodulation eines vorliegenden Hochfrequenzfeldes durchzuführen.

Optional kann eine Batterie der Massenspeicherkarte ergänzend zur Energieversorgung herangezogen werden. In dem passiven Betriebsmodus arbeitet die Massenspeicherkarte 120 also wie ein herkömmlicher aktiver oder passiver Transponder. Die Auswahleinheit 135 kann angepasst sein, dass Auswahlsignal abhängig von einer zur Verfügung stehenden Batteriespannung und/oder Energiekapazität der Batterie zu gestalten.

Alternativ oder ergänzend kann das Signal zur Auswahl des Betriebsmodus unabhängig von einer gemessenen Spannungsversorgung vorgegeben werden. Das Auswahlsignal kann sowohl in Antwort auf ein von der Massenspeicherkarte 120 empfangenes Kommando erzeugt werden als auch in Abhängigkeit von der gerade auf der Steuereinheit 125 ausgeführten Anwendung erzeugt werden. Die Auswahl des passiven Betriebsmodus kann für bestimmte Anwendungen, die aus Sicherheitsgründen nur über sehr kurze Distanzen Daten kontaktlos austauschen sollen, gewählt werden. Eine solche Anwendung könnte beispielsweise eine elektronische Geldbörse sein. Eine zweite Anwendung auf der Steuereinheit 125, beispielsweise ein Fahrschein eines öffentlichen Personennahverkehrssystems, kann dagegen den aktiven Betriebsmodus auswählen, um die erhöhte Reichweite auszunutzen.

Es kann sogar sinnvoll sein, einen Vorgabewert für das Auswahlsignal vorzusehen. Beispielsweise für eine Massenspeicherkarte, die eine Fahrscheinanwendung als Defaultanwendung nach ihrer Aktivierung verwendet und keine Batterie aufweist, ist es sinnvoll, den Vorgabewert so zu wählen, dass der passive Betriebsmodus voreingestellt ist. Hat die Massenspeicherkarte dagegen eine - zumindest im vollständig geladenen Zustand ausreichend leistungsstarke - Batterie, sollte durch den Vorgabewert der aktive Betriebsmodus der Massenspeicherkarte ausgewählt werden.

Eine Steuerung des Auswahlsignals kann auch verwendet werden, um selektiv die Reichweite für ein bestimmtes Zeitfenster einer Transaktion zu erhöhen oder zu erniedrigen. Als Zeitfenster kann eine einleitende Phase, eine zentrale Phase oder eine abschließende Phase der Transaktion gewählt sein. Beispielsweise erfolgt in der einleitenden Phase ein Aufbau der Kommunikationsverbindung und eine Authentisierung, in der zentralen Phase ein Abbuchen (eines Fahrscheins) und in der abschließenden Phase ein Protokollieren der Transaktion und ein Abbau der Kommunikationsverbindung.

Arbeitet beispielsweise eine Fahrscheinanwendung zunächst im aktiven Modus, so kann dieser Modus für eine Phase der Annäherung der Massenspeicherkarte 120 an ein Lesegerät des Fahrscheinsystems verwendet werden. Da bereits in einem größeren relativen Abstand mit der zu einer Fahrscheintransaktion gehörigen Kommunikation begonnen werden kann, verkürzt sich die für die Fahrscheintransaktion benötigte Zeit.

Sobald die Auswahleinheit 135 der Massenspeicherkarte 120 einen vorgegebenen Wert für eine kontaktlose Spannungsversorgung durch ein HF-Feld erkennt, erzeugt sie ein entsprechendes Auswahlsignal, um die Massenspeicherkarte in den passiven Betriebsmodus umzuschalten. Der vorgegebene Wert kann so gewählt werden, dass sichergestellt ist dass sich die Massenspeicherkarte innerhalb der Kommunikationsreichweite des Lesegerätes befindet, welches das HF-Feld aussendet.

Zusätzlich oder alternativ zu einem Umschalten durch die Auswahleinheit 135 kann beispielsweise die Fahrscheinanwendung ein Umschalten in den passiven Betriebsmodus zumindest für einen bestimmten Zeitraum, vorzugsweise die zentrale Phase, der Transaktion erzwingen. Somit könnte insbesondere gewährleistet werden, dass ein Fahrschein nicht versehentlich bei einem zufälligen Annähern an ein Fahrscheinlesegerät entwertet wird, sondern nur wenn nach einer groben Annäherung auch ein gezieltes Annähern in den Kommunikationsbereich des Lesegerätes erfolgt.

Schließlich ist es auch denkbar den aktiven Betriebsmodus für den Zeitraum am Ende einer Transaktion zu verwenden, um zu vermeiden, dass eine an sich erfolgreiche Transaktion nicht vollständig abgeschlossen werden kann. Verschiedene Kombinationen der zeitabhängigen Auswahl des Betriebsmodus für bestimmte Phasen können abhängig vom Transaktionstyp sinnvoll sein.

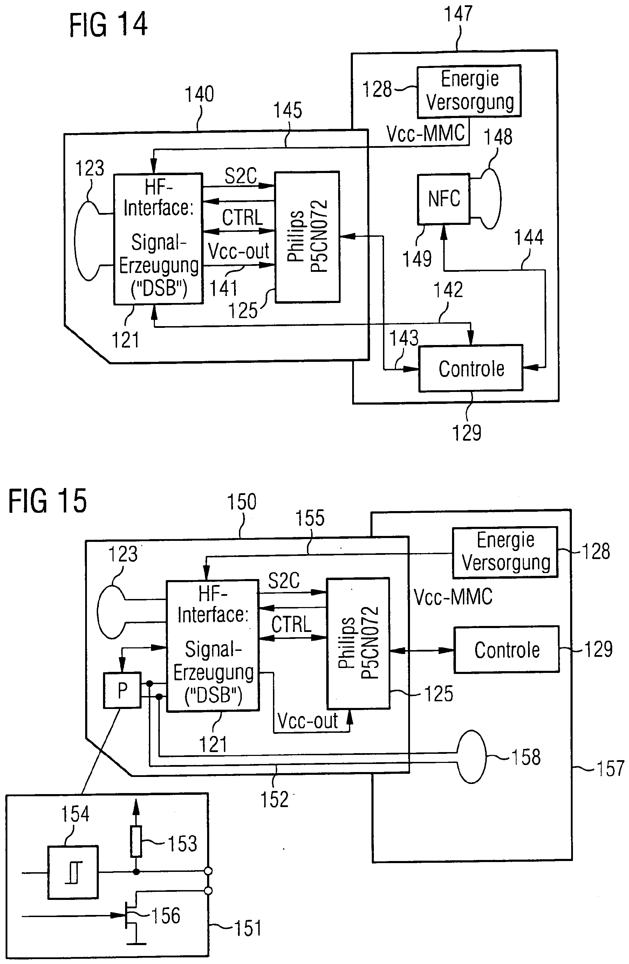

Mit Bezug auf Fig. 14 werden insbesondere Möglichkeiten beschrieben, einen Betriebsmodus selektiv zu deaktivieren. Eine Deaktivierung kann ergänzend oder alternativ zu einer Auswahl des Betriebsmodus erfolgen.

Fig. 14 zeigt einen tragbaren Datenträger 140, der reversibel verbunden ist mit einem Endgerät 147 mit eigener Kontaktlosschnittstelle für die Nahbereichskommunikation 148,149. Das Endgerät 147 weist neben einer Energieversorgung 128 und einer Steuereinheit 129 eine Schnittstelleneinheit 149 auf, welche vorzugsweise eine NFC-Schnittstelleneinheit ist und an welche eine Antenne 148 angeschlossen ist. Das Endgerät 147 kann somit abhängig von dem gewählten Betriebsmodus ("Being Reader", "Being Card" und "Peer-to-Peer") der kontaktlosen Schnittstelleneinheit 149 in unterschiedlichen Rollen in einem NFC-System oder einem RFID-System auftreten.

In dem tragbaren Datenträger 140 sind die Antenne 123, der Interface-Baustein 121 und die Steuereinheit 125 angeordnet. Der tragbare Datenträger 140 wird optional durch die Energieversorgungseinheit 128 mit einer Versorgungsspannung VCC-MMC versorgt. Die Steuereinheit 129 des Endgeräts 147 ist zumindest mit dem Interface-Baustein 121 und optional auch mit der Steuereinheit 125 des tragbaren Datenträgers verbunden.

Wenn die Schnittstelleneinheit 149 des Endgerätes 147 im Modus "BeingReader" arbeitet, könnte ein nicht in das Endgerät 147 eingesetzter tragbarer Datenträger 140 mit dem Endgerät 147 drahtlos kommunizieren.

Ist dagegen der tragbare Datenträger 140 wie dargestellt in das Endgerät 147 eingesetzt, so ist eine solche kontaktlose Kommunikation in der Regel nicht erwünscht. Eine kontaktlose Kommunikation zwischen dem tragbaren Datenträger 140 in seinem eingesetzten Zustand und dem Endgerät 147 wäre sogar schädlich, da das Auslesen anderer kontaktloser Datenträger, die sich ebenfalls im Ansprechfeld des Endgerätes 147 befinden, erschwert oder sogar verhindert wird. In jedem Fall würde zumindest die Performance der kontaktlosen Schnittstelle des Endgeräte leiden, da zunächst eine Kollision zwischen den dann vorhandenen zwei kontaktlosen Transpondern (eingesetzter tragbarer Datenträger 140 und externer RFID-Transponder) aufgelöst werden müsste. Des weiteren kann es unerwünscht sein, daß sowohl der tragbare Datenträger 140 als auch das Endgerät 147 als NFC-Einheit im Modus "BeingCard" mit einem externen Lesegerät kommunizieren.

Es ist vorgesehen, einer der beiden im System aus Endgerät 147 und tragbarem Datenträger 140 vorhandenen kontaktlosen Schnittstellen 148,149 und 121,123 eine erhöhte Kommunikationspriorität einzuräumen. Die jeweils andere kontaktlose Schnittstelle kann gegebenenfalls dauerhaft oder zeitweise deaktiviert werden. Die Priorität einer Schnittstelle sollte vorzugsweise temporär vergeben werden. So kann es beispielsweise vorteilhaft sein, zu einem ersten Zeitpunkt einer NFC-Schnittstelle des Endgerätes eine höhere Priorität zuzuordnen, wenn sich dieses in einem bestimmten Modus, insbesondere dem Modus "BeingReader" befindet. Zu einem zweiten Zeitpunkt soll dagegen der kontaktlosen Schnittstelle des tragbaren Datenträgers 140 eine höhere Priorität zugeordnet werden. Für die Priorisierung der Schnittstellen wird in dem System aus Endgerät 147 und tragbarem Datenträger 140 ein Deaktivierungssignal für eine der beiden kontaktlosen Schnittstellen erzeugt.

Ein erstes Kriterium, welche Schnittstelle zu bevorzugen ist, kann die auszuführende Applikation sein. So kann es beispielsweise sinnvoll sein, mit einigen Anwendungen bevorzugt über den tragbaren Datenträger 140 zu kommunizieren, beispielsweise für Zahlungsverkehrsanwendungen. Andere Anwendungen werden dagegen bevorzugt über die kontaktlose Schnittstelle des Endgerätes kommunizieren, wenn beispielsweise Software für das Endgerät 147 geladen werden soll. Ein weiteres Kriterium kann auch der Speicherort der ausgeführten Anwendung sein. So ist es gegebenenfalls für eine auf der Steuereinheit 125 des tragbaren Datenträgers 140 laufende Anwendung einfach, über die eigene Kontaktlos-Schnittstelle 121 mit einem externen kontaktlosen Lesegerät zu kommunizieren. Umgekehrt kann es für eine Anwendungs-Software, die durch die Steuereinheit 129 des Endgerätes 147 ausgeführt wird, einfacher sein, die (NFC-)Schnittstelleneinheit 149 des Endgerätes 147 zu verwenden.

Ein weiteres Kriterium zur Festlegung der Priorität der kontaktlosen Schnittstellen kann der Betriebsmodus ("Being Reader", "Being Card" und "Peer-to-Peer") der (NFC-)Schnittstelleneinheit 149 des Endgerätes 147 sein. Auch Vorgaben, die der Benutzer des Endgerätes 147 beispielsweise im Rahmen einer Gerätekonfiguration ausgewählt hat, können als Kriterium verwendet werden.

Zur Umschaltung der Priorität zwischen den beiden kontaktlosen Schnittstellen sind verschiedene Verfahren anwendbar.

Gemäß einem ersten Ansatz sendet die Steuereinheit 125 des tragbaren Datenträgers 145 über die interne Kommunikationsschnittstelle 141 ein Kommando zur Deaktivierung oder (Re-)Aktivierung der kontaktlosen Schnittstelle an die Schnittstelleneinheit 121. Die kontaktlose Schnittstelle des Endgerätes 147 erlangt eine höhere Priorität, da die kontaktlose Schnittstelle des tragbaren Datenträgers 125 vollständig deaktiviert wird. Ein Wiedereinschalten der kontaktlosen Schnittstelle des tragbaren Datenträgers 140 durch die Steuereinheit 125 kann automatisch mit dem Empfang eines beliebigen weiteren Kommandos oder eines hierfür speziell bestimmten Kommandos über die Kontaktschnittstelle 143 erfolgen.

Gemäß einem zweiten Ansatz wird die Schnittstelleneinheit 121 des tragbaren Datenträgers 140 unter Umgehung der Steuereinheit 125 aktiviert oder deaktiviert durch ein spezielles Freigabe- oder Deaktivierungssignal. Bei dem Freigabesignal kann es sich beispielsweise um ein logisches Signal (Pegel hoch oder niedrig) handeln. Wiederum erlangt die kontaktlose Schnittstelle des Endgerätes 147 eine höhere Priorität durch die Deaktivierung der kontaktlosen Schnittstelle des tragbaren Datenträgers 140. Ein solches Deaktivierungssignal kann auch kurzzeitig angelegt werden, beispielsweise zu einem Zeitpunkt, in welchem die kontaktlose Schnittstelleneinheit 149 des Endgerätes ein REQUEST-Signal sendet, um eine Kommunikationsverbindung zu einem möglicherweise anwesenden externen Transponder aufzubauen.

Gemäß einem dritten Ansatz wird die interne Versorgungsspannung VCC_MMC, welche dem tragbaren Datenträger zugeführt wird, unterbrochen. Ergänzend zu der Unterbrechung der Spannungsversorgung müssen jedoch weitere Schritte erfolgen, um die Aktivierung der kontaktlosen Schnittstelle des tragbaren Datenträgers durch ein externes hochfrequentes Feld eines Lesegerätes oder durch das hochfrequente Feld des Endgerätes zu unterbinden. Beispielsweise können in dem tragbaren Datenträger 140 nicht dargestellte Mittel vorgesehen sein um zu erkennen, daß der tragbare Datenträger in ein Endgerät eingesetzt ist. Eine solche "Eingebaut-Erkennung" wird später näher beschrieben.

Fig. 15 zeigt einen tragbaren Datenträger 150 mit einer internen Antenne 123, die an ein Endgerät 157 mit einer für den tragbaren Datenträger verwendbaren externen Antenne 158 ausgestattet ist. Der tragbare Datenträger kann wahlweise die interne Antenne 123 oder die externe Antenne 158 des Endgerätes 157 zur kontaktlosen Datenübertragung verwenden.

In der in Fig. 15 gezeigten Ausführungsform weist der tragbare Datenträger 150 Prüfmittel 151 auf, die angepaßt sind zu prüfen, ob der tragbare Datenträger 150 an eine externe Antenne 158 angeschlossen ist. Die gezeigte beispielhafte Ausgestaltung eines solchen Prüfmittels 151 macht sich die typische Eigenschaft einer RFID-Antenne für den Frequenzbereich 13,56 MHz zunutze, wonach der Gleichstromwiderstand einer solchen Antenne in der Regel nur wenige Ohm beträgt. Zur Prüfung wird ein Anschluß der Antenne mit einem hochohmigen Pull-Up-Widerstand 153 auf die Versorgungsspannung WC gelegt. Der zweite Anschluß wird mit einem Schalttransistor 156 zeitweise auf Masse (GND) gelegt. Besteht zwischen den beiden Anschlußtakten eine galvanische Verbindung durch eine niederohmige Antenne 158, so kann der Schaltvorgang des Transistors als Potentialwechsel (Spannungssprung) am Eingang einer Auswertungsschaltung 154, beispielsweise in Form eines Schmitt-Triggers, detektiert werden.

Es ist eine weitere Möglichkeit, dem tragbaren Datenträger 150 zumindest zu einem ersten Zeitpunkt, beispielsweise nach dem Einschalten des Endgerätes 157, über die kontaktbehaftete Schnittstelle ein spezielles Kommando zur Auswahl der Antenne zu senden. Wird ein solches Kommando nicht gesendet, weil beispielsweise eine externe Antenne 158 nicht zur Verfügung steht oder weil der Benutzer des Endgerätes eine entsprechend Benutzerkonfiguration gewählt hat, bleibt die interne Antenne 123 des tragbaren Datenträgers ausgewählt. Ein weiteres spezielles Kommando sollte für das Zurückschalten von der externen Antenne 158 auf die interne Antenne 123 vorgesehen sein, um auch ein mehrfaches Umschalten zwischen den Antennen zu ermöglichen.

Ein dritter Ansatz zur Umschaltung zwischen den verfügbaren Antennen besteht in der Verwendung eines einfachen Schaltsignals (Pegel hoch oder niedrig), welches an einen explizit dafür vorgesehenen Anschluß der Kontaktschnittstelle des tragbaren Datenträgers angelegt werden kann. Dieses Schaltsignal kann beispielsweise auf einen festen Pegel gelegt werden, um das Vorhandensein bzw. Fehlen einer externen Antenne anzuzeigen. Ein solches Schaltsignal ermöglicht dem Endgerät je nach Bedarf, also insbesondere abhängig vom Betriebszustand des Endgerätes 157 oder von der Benutzerkonfiguration, eine Auswahl der Antenne zu treffen.

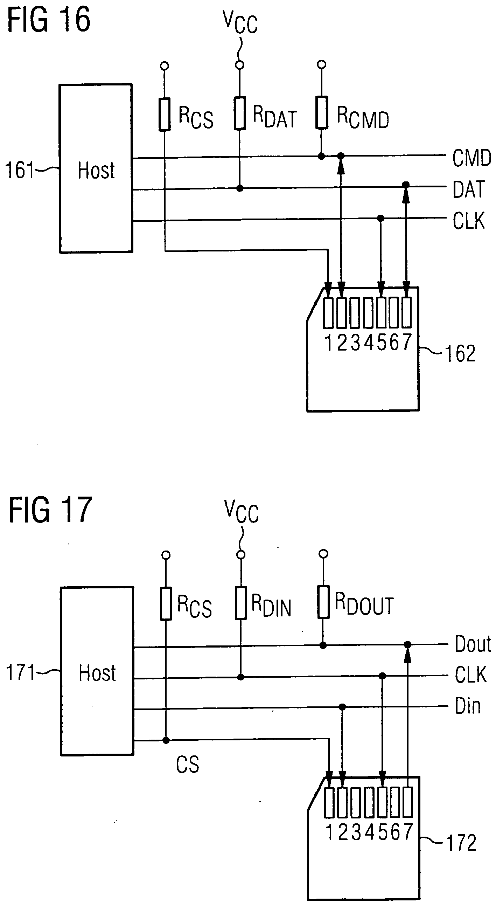

Mittel zur Erkennung, ob der tragbare Datenträger in ein Endgerät eingebaut ist (Eingebaut-Erkennung) werden zunächst allgemein erläutert und anschließend mit Bezug auf die Fig. 16 bis 18 näher beschrieben.

Für verschiedenste Funktionen kann es wichtig sein zu erkennen, ob der tragbare Datenträger in ein Endgerät eingebaut ist, oder ob der tragbare Datenträger unabhängig von einem Endgerät betrieben wird. Es ist daher vorgesehen, in dem tragbaren Datenträger mindestens zwei Betriebsmodi ("unabhängiger" Betrieb und "abhängiger" (eingebauter) Betrieb) vorzusehen. Diese beiden Betriebsmodi können zunächst unabhängig von einem möglichen aktiven oder passivem Betriebsmodus des tragbaren Datenträgers wählbar sein. In der Regel wird jedoch der unabhängige Betriebsmodus fest mit dem passiven Betriebsmodus verbunden sein, da die Energieversorgung des tragbaren Datenträgers durch das Feld des kontaktlosen Lesegerätes erfolgt.

Nach einem Betriebsstart (Hochfahren) des Endgerätes befindet sich das Endgerät entsprechend der MMC-Spezifikation im sogenannten "Card Identification Mode". In diesem Modus sucht das Endgerät nach (neuen) mit ihm verbundenen Karten. Eine erfindungsgemäße Massenspeicherkarte wird daher zunächst im unanhängigen Betriebsmodus gestartet. Wenn über die Kontaktschnittstelle ein Kommando SET_RCA empfangen wird, wechselt die Massenspeicherkarte in den abhängigen Betriebsmodus.

Für eine SIM-Karte als tragbarer Datenträger kann als Umschaltkriterium vom unabhängigen in den abhängigen Betriebsmodus das Anlegen einer Reset-Sequenz auf der Kontaktschnittstelle oder auch der Empfang einer ersten APDU über diese Schnittstelle verwendet werden.

Optional kann ein Wechsel von einem unabhängigen in einen abhängigen Betriebszustand von einer erfolgreichen Authentisierung abhängig gemacht werden. Die Authentisierung kann eine gegenseitige Authentisierung zwischen Endgerät und tragbarem Datenträger sein, es sollte aber zumindest eine Authentisierung des Endgerätes gegenüber dem tragbaren Datenträger umfassen. Eine solche Authentisierung vor Umschaltung des Betriebszustandes kann insbesondere dann sinnvoll sein, wenn das Endgerät beispielsweise zum Zweck der PIN-Eingabe besonders vertrauenswürdig sein muß.

In den Fig. 16 und 17 sind die elektrischen Beschaltungen der Kontaktschnittstelle einer MMC 162,172 als Massenspeicherkarte durch einen Host 161,171 als Endgerät für den MMC-Modus respektive den SPI-Modus gemäß MultiMediaCard-Spezifikation gezeigt.

In einem weiteren Verfahren zur Erkennung eines eingebauten Zustandes eines tragbaren Datenträgers wird der Zustand zumindest einer der Kontakte der Kontaktschnittstelle überprüft, um den Betriebsmodus entsprechend zu wählen.

Im Fall der gezeigten Massenspeicherkarten 162,172 wird zu einem Zeitpunkt, der nach dem Hochfahren des Endgerätes 161,171 liegt, also zumindest eine der Leitungen CMD, DAT, CLK, VCC_MMC, VCC1, VSS1, VSS2 überprüft. Beispielsweise befinden sich die Leitungen CMD, DAT im Ruhezustand durch einen Pull-Up-Widerstand auf einem hohen Pegel. Die Leitung VCC1 befindet sich auf einem hohen Pegel und die Leitung VSS1 auf einem niedrigen Pegel. Entspricht wenigstens einer der Pegel dem für den eingebauten Zustand erwarteten, so wechselt die Massenspeicherkarte 162,172 in den abhängigen ("Eingebaut")-Betriebsmodus. Andernfalls oder wenn beispielsweise die gemessenen Pegelwerte nicht einer erwarteten Kombination der Pegelwerte entsprechen verbleibt die Massenspeicherkarte 162,172 in dem unabhängigen Betriebsmodus.

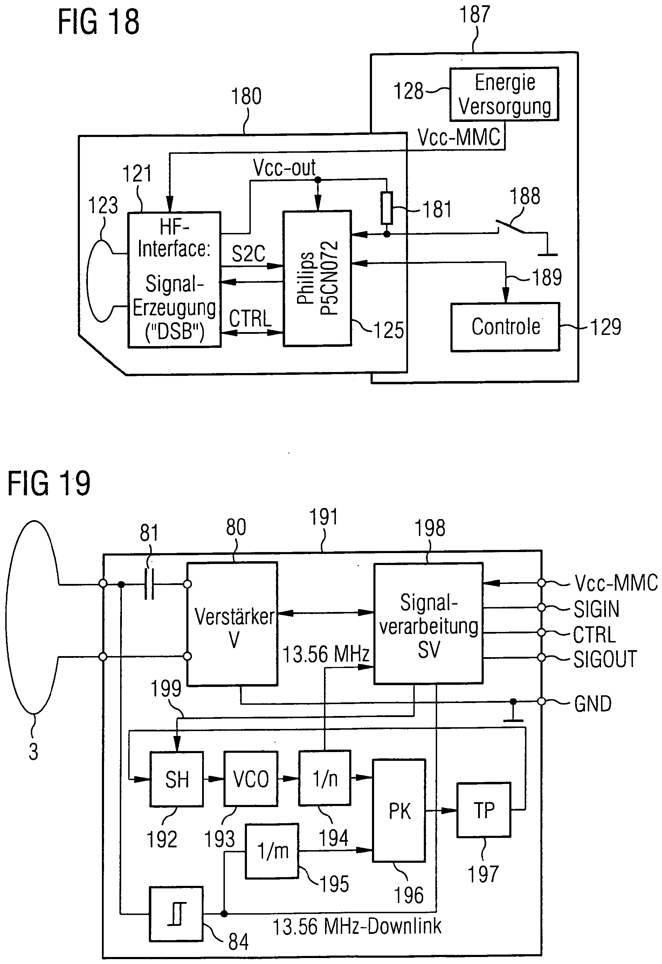

In Fig. 18 ist eine weitere Möglichkeit für eine Eingebaut-Erkennung dargestellt. Um zu erkennen, ob ein tragbarer Datenträger 180 in ein Endgerät 187 eingebaut ist, wird der logische Pegel eines Kontakts, der beispielsweise mit einem Pull-Up-Widerstand 181 beschaltet sein kann, abgefragt. Wird der Kontakt durch einen Schalter 188 in dem Endgerät 187 auf einen niedrigen Pegel (GND) gezogen, so kann dies vom tragbaren Datenträger 180 detektiert werden.

Anstelle des Schalters 188 kann auch eine direkte Verbindung auf Masse (GND) im Endgerät 187 verwendet werden. Der Schalter 188 kann durch eine Benutzerkonfiguration des Endgeräts 187 einstellbar sein. Weiterhin kann der Schalter 188 so ausgelegt sein, daß er nur bei durch die Energieversorgung 128 vorhandener Batteriespannung in dem Endgerät 187 den Kontakt zur Erkennung eines eingebauten Zustands auf Masse schaltet. Eine solche Ausgestaltung ist besonders vorteilhaft, da der tragbare Datenträger 180 bei vorhandener Batteriespannung in dem Endgerät - unabhängig davon, ob das Endgerät gerade ein- oder ausgeschaltet ist - immer den Zustand "eingebaut" erkennt und den abhängigen Betriebsmodus wählt. Bei einer entladenen Batterie hingegen wird der unabhängige Betriebsmodus gewählt, so daß in dem tragbaren Datenträger 180 gegebenenfalls andere Softwarefunktionen verfügbar werden (beispielsweise ein Notfallbetrieb). Die Möglichkeit der Einstellung des Schalters über eine Benutzerkonfiguration sowie die Überwachung der Batteriespannung kann auch logisch verknüpft und somit miteinander kombiniert werden.

In einer weiteren Variante ist der Schalter 188 ein mechanischer Schalter, beispielsweise ein DIP-Schalter oder Schiebeschalter.

Der tragbare Datenträger 180 soll sich in dem abhängigen Betriebsmodus anders verhalten als in dem unabhängigen Betriebsmodus. Insbesondere können Zugriffsrechte auf Programmteile und/oder Daten des Dateisystems abhängig vom Betriebsmodus gestaltet sein. So kann es beispielsweise sinnvoll sein, bestimmte Daten über die kontaktlose Schnittstellen 121,123 nur dann beschreiben zu können, wenn der tragbare Datenträger 180 in einem Endgerät 187 eingebaut ist und der tragbare Datenträger 180 diesen Zustand auch erkannt hat. Die Änderungen der Daten können dem Benutzer über eine nicht dargestellte Anzeigevorrichtung des Endgeräts 187 angezeigt werden. Auf dem tragbaren Datenträger 180 sind Programmteile und/oder Daten mit komplexen Zugriffsberechtigungen versehen. In diesen Zugriffsberechtigungen kann festgelegt werden, in welchem Betriebsmodus (unabhängig, abhängig, aktiv, passiv, aktiv abhängig, passiv abhängig oder passiv unabhängig) ein bestimmtes Programmteil aufgerufen werden darf, oder ob Daten in diesem Betriebszustand gelesen, geschrieben, gelöscht oder verwendet werden dürfen.

Fig. 19 zeigt eine verbesserte Schaltung für einen Interface-Baustein, beispielsweise im Sinne von Fig. 8, die es ermöglicht, den benötigten Oszillator über eine PLL-Schaltung mit dem empfangenen Signal eines Lesegeräts zu synchronisieren. Der Oszillator benötigt daher keinen eigenen Schwingquarz.

Ein Interface-Baustein 191 ist mit einer Antenne 3 verbunden. Der Interface-Baustein 191 umfasst einen Verstärker 80, eine Signalverarbeitungseinheit 198 sowie eine modifizierte Oszillatorschaltung. Die modifizierte Oszillatorschaltung 192 bis 197 umfaßt einen spannungsgesteuerten Oszillator 193, einen ersten binären Teiler 194 (1/n), einen zweiten binären Teiler 195 (1/m), einen Phasenkomparator 196, einen Tiefpassfilter 197 sowie eine Sample-and-Hold-Schaltung 192. Als Sample-and-Hold-Schaltung 192 kann beispielsweise eine herkömmliche Schaltung mit der Bezeichnung LF 198 von der Firma National Semiconductor verwendet werden.

Die Oszillatorschaltung 192 bis 197 ist durch ein von der Signalverarbeitung 191 empfangenes Schaltsignal 199, welches an die Sample-and-Hold-Schaltung 192 angelegt ist, zwischen den Zuständen "Empfangsbetrieb" und "Sendebetrieb" umschaltbar.

Über die Antenne 3 wird das 13,56 MHz-Signal eines entfernten Lesegeräts empfangen und über eine Signalaufbereitung 84, beispielsweise in Form eines Schmitt-Triggers, der Signalverarbeitung zugeführt. Durch den zweiten binären Teiler 195 wird aus dem empfangenen Signal ein Referenzsignal, beispielsweise mit der Frequenz 6,87 MHz, erzeugt und dem Phasenkomparator 196 zugeführt. Der spannungsgesteuerte Oszillator 193 erzeugt eine zweite Frequenz, welche bevorzugt höher als 13,56 MHz ist und beispielsweise 27,12 MHz betragen kann. Durch den erstsen binären Teiler 194 wird aus dem Signal des Oszillators ein zweites Referenzsignal, beispielsweise mit der Frequenz 6,87 MHz, erzeugt und ebenfalls dem Phasenkomparator 196 zugeführt. Der Phasenkomparator 196 erzeugt aus der Phasen- und Frequenzdifferenz der beiden Referenzsignale eine Regelspannung, welche in einem Tiefpaß 197 geglättet und anschließend der Sample-and-Hold-Schaltung 192 zugeführt wird.

Die Sample-and-Hold-Schaltung 192 wird im Empfangsbetrieb erfindungsgemäß im Sample-Modus betrieben und fungiert dabei als Spannungsfolger, so dass die Regelspannung unverändert dem spannungsgesteuerten Oszillator 193 zugeführt wird. Dies hat zur Folge, daß der Oszillator 193 nach einer kurzen Regelzeit phasenstarr - im Frequenzverhältnis m zu n der beiden binären Teiler - an die Frequenz des externen Lesegerätes angekoppelt (synchronisiert) ist.

Im Sendebetrieb wird die Sample-and-Hold-Schaltung 192 erfindungsgemäß im Hold-Modus betrieben. Die zuvor im Empfangsbetrieb ermittelte Regelspannung wird nun gehalten, so daß der Oszillator 193 die eingestellte Frequenz beibehält. Durch den ersten binären Teiler 194 wird die Frequenz des Oszillators 193 auf 13,56 MHz herabgeteilt und der Signalaufbereitung zugeführt.

Zugunsten der Lesbarkeit der vorliegenden Beschreibung wurden die einzelnen vorteilhaften Merkmale und Anordnungen nicht in jeder Ausführungsform wiederholt dargestellt, diskutiert und kombiniert.

## Patentansprüche

1. Verfahren zur Übertragung von Daten von einem tragbaren Datenträger (1,150) mit einer kontaktbehafteten Schnittstelle und einer kontaktlosen Schnittstelle zu einem Lesegerät (100), zu welchem Daten von Transpondern durch Modulation eines Feldes des Lesegerätes übertragen werden können, **dadurch gekennzeichnet, daß** der tragbare Datenträger (1, 150) zum Übertragen der Daten zu dem Lesegerät (100) in einem aktiven Betriebsmodus ein eigenes Feld erzeugt und als ein Signal sendet, welches für das Lesegerät (100) als eine Modulation des Lesegerätfeldes (110) durch einen Transponder auswertbar ist und durch Umschalten zwischen einer Antenne (123) des tragbaren Datenträgers (1, 150) und einer Antenne (158) eines Endgeräts (157), in welches der tragbare Datenträger (1, 150) eingesetzt ist, für die kontaktlose Datenübertragung.

2. Verfahren nach Anspruch 1 **dadurch gekennzeichnet, dass** der tragbare Datenträger (1) eine Massenspeicherkarte ist, eine SIM-Karte oder ein Sicherheitsmodul für ein Zahlungsverkehrsterminal oder einen Computer ist.

3. Verfahren nach Anspruch 1 oder 2 **gekennzeichnet durch**, der tragbare Datenträger (1) in einem passiven Betriebsmodus eine Modulation des Lesegerätfeldes durchführt.

4. Verfahren nach Anspruch 3, **gekennzeichnet durch**, Auswählen des aktiven und/oder des passiven Betriebsmodus.

5. Verfahren nach Anspruch 4 **dadurch gekennzeichnet, dass** der Schritt des Auswählens abhängig von einem internen Auswahlsignal des tragbaren Datenträgers (1) erfolgt.

6. Verfahren nach einem der Anspruche 4 oder 5 **dadurch gekennzeichnet, dass** das interne Auswahlsignal abhängig von einer Energieversorgung des tragbaren Datenträgers (1) erzeugt wird.

7. Verfahren nach einem der Anspruche 4 bis 6 **dadurch gekennzeichnet, dass** der Schritt des Auswählens abhängig von einem empfangenen externen Auswahlsignal erfolgt, das der tragbare Datenträger empfängt.

8. Verfahren nach einem der Anspruche 4 bis 7 **dadurch gekennzeichnet, dass** der Schritt des Auswählens abhängig von einem empfangenen externen Kommando erfolgt.

9. Verfahren nach Anspruch 1 bis 8, **dadurch gekennzeichnet, dass** der tragbare Datenträger (1) ein Umschaltsignal zum Umschalten zwischen verfügbaren Antennen intern erzeugt.

10. Verfahren nach Anspruch 1 bis 9, **dadurch gekennzeichnet, dass** der tragbare Datenträger (1) ein externes Umschaltsignal empfängt.

11. Verfahren nach Anspruch 1 bis 10, **dadurch gekennzeichnet, dass** der tragbare Datenträger (1) das Umschalten in Antwort auf ein empfangenes externes Kommando vornimmt.

12. Verfahren nach einem der Anspruche 1 bis 11, **gekennzeichnet durch**, Bestimmen ob der tragbare Datenträger (1) in ein Endgerät eingesetzt ist.

13. Verfahren nach Anspruch 1 bis 12 **dadurch gekennzeichnet, daß** der tragbare Datenträger (1) das Signal derart sendet, daß es dem Lesegerät eine Lastmodulation des Lesegerätfeldes vortäuscht.

14. Tragbarer Datenträger (1, 150) mit einer kontaktlosen Schnittstelle zur Übertragung von Daten von dem tragbaren Datenträger (150) zu einem Lesegerät (100), zu welchem Daten von Transpondern durch Lastmodulation eines Feldes des Lesegerätes übertragen werden können, **dadurch gekennzeichnet, dass**
der tragbare Datenträger (150) eingerichtet ist zum Übertragen der Daten zu dem Lesegerät (100) in einem aktiven Betriebsmodus ein eigenes Feld zu erzeugen und als ein Signal zu senden, welches für das Lesegerät (100) als eine Lastmodulation des Lesegerätfeldes (110) durch einen Transponder auswertbar ist, und
der tragbare Datenträger (150) eingerichtet ist für die kontaktlose Datenübertragung zwischen einer Antenne (123) des tragbaren Datenträgers (1) und einer Antenne (158) des Endgeräts (157), in welches der tragbare Datenträger (1) eingesetzt ist, umzuschalten.

15. Tragbarer Datenträger **gekennzeichnet durch** eine Schnittstelleneinheit gemäß Anspruch 14 angepasst zur Durchführung eines Verfahrens gemäß einem der Ansprüche 1 bis 13.

16. System zur Datenübertragung umfassend einen tragbaren Datenträger (150) nach Anspruch 14 oder 15 und das Endgerät (157) mit der für den Datenträger verwendbaren Antenne.

## Claims

1. A method for transmitting data from a portable data carrier (1,150) with a contact-type interface and with a contactless interface to a reading device (100) to which data can be transmitted by transponders through modulation of a field of the reading device, **characterized in that** the portable data carrier (1, 150), for transmitting the data to the reading device (100), generates its own field in an active operating mode and transmits it as a signal which is evaluable for the reading device (100) as a modulation of the reading device field (110) by a transponder, by toggling between an antenna (123) of the portable data carrier (1,150) and an antenna (158) of a terminal (157) in which the portable data carrier (1,150) is inserted, for contactless data transmission.

2. The method according to claim 1, **characterized in that** the portable data carrier (1) is a mass storage card, a SIM card or a security module for a payment transaction terminal or a computer.

3. The method according to claim 1 or 2, **characterized in that** the portable data carrier (1) carries out a modulation of the reading device field in a passive operating mode.

4. The method according to claim 3, **characterized by** selecting the active and/or passive operating mode.

5. The method according to claim 4, **characterized in that** the selecting step is effected in dependence on an internal selection signal of the portable data carrier (1).

6. The method according to either of claims 4 or 5, **characterized in that** the internal selection signal is generated in dependence on a power supply of the portable data carrier (1).

7. The method according to any of claims 4 to 6, **characterized in that** the selecting step is effected in dependence on a received external selection signal which the portable data carrier receives.

8. The method according to any of claims 4 to 7, **characterized in that** the selecting step is effected in dependence on a received external command.

9. The method according to claim 1 to 8, **characterized in that** the portable data carrier (1) internally generates a toggle signal for toggling between available antennae.

10. The method according to claim 1 or 9, **characterized in that** the portable data carrier (1) receives an external toggle signal.

11. The method according to claims 1 to 10, **characterized in that** the portable data carrier (1) carries out the toggling in response to a received external command.

12. The method according to any of claims 1 to 11, **characterized by** determining whether the portable data carrier (1) is inserted in a terminal.

13. The method according to claims 1 to 12, **characterized in that** the portable data carrier (1) transmits the signal such that it simulates a load modulation of the reading device field to the reading device.

14. A portable data carrier (1,150) with a contactless interface for transmitting data from a portable data carrier (150) to a reading device (100) to which data can be transmitted by transponders through load modulation of a field of the reading device, **characterized in that**
the portable data carrier (150) is configured, for transmitting the data to the reading device (100), to generate its own field in an active operating mode and to transmit it as a signal which is evaluable for the reading device (100) as a load modulation of the reading device field (110) by a transponder, and
the portable data carrier (150) is configured for the contactless data transmission, to toggle between an antenna (123) of the portable data carrier (1) and an antenna (158) of the terminal (157) in which the portable data carrier (1) is inserted.

15. A portable data carrier, **characterized by** an interface unit according to claim 14 adapted for carrying out a method according to any of claims 1 to 13.

16. A system for data transmission comprising a portable data carrier (150) according to claim 14 or 15 and the terminal (157) having the antenna usable for the data carrier.

## Revendications

1. Procédé de transmission de données d'un support de données portable (1, 150) comprenant une interface avec contact et une interface sans contact à un appareil de lecture (100) auquel des données peuvent être transmises à partir des transpondeurs par modulation d'un champ de l'appareil de lecture, **caractérisé en ce que** le support de données portable (1, 150), pour la transmission des données à l'appareil de lecture (100), génère dans un mode actif de fonctionnement un propre champ et l'émet en tant qu'un signal qui est exploitable pour l'appareil de lecture (100) en tant qu'une modulation du champ d'appareil de lecture (110) par un transpondeur, et par commutation entre une antenne (123) du support de données portable (1, 150) et une antenne (158) d'un terminal (157) dans lequel le support de données portable (1, 150) est inséré, pour la transmission de données sans contact.

2. Procédé selon la revendication 1, **caractérisé en ce que** le support de données portable (1) est une carte mémoire de masse, une carte SIM ou un module de sécurité pour une borne de transactions financières ou un ordinateur.

3. Procédé selon la revendication 1 ou 2, **caractérisé en ce que** le support de données portable (1) effectue dans un mode passif de fonctionnement une modulation du champ de l'appareil de lecture.

4. Procédé selon la revendication 3, **caractérisé par** sélection du mode actif et/ou passif de fonctionnement.

5. Procédé selon la revendication 4, **caractérisé en ce que** l'étape de la sélection a lieu en fonction d'un signal de sélection interne du support de données portable (1).

6. Procédé selon une des revendications 4 ou 5, **caractérisé en ce que** le signal de sélection interne est généré en fonction d'une alimentation en énergie du support de données portable (1).

7. Procédé selon une des revendications de 4 à 6, **caractérisé en ce que** l'étape de la sélection a lieu en fonction d'un signal externe de sélection reçu que le support de données portable reçoit.

8. Procédé selon une des revendications de 4 à 7, **caractérisé en ce que** l'étape de la sélection a lieu en fonction d'un ordre externe reçu.

9. Procédé selon une des revendications de 1 à 8, **caractérisé en ce que** le support de données portable (1) génère en interne un signal de commutation pour la commutation entre des antennes disponibles.

10. Procédé selon une des revendications de 1 à 9, **caractérisé en ce que** le support de données portable (1) reçoit un signal externe de commutation.

11. Procédé selon une des revendications de 1 à 10, **caractérisé en ce que** le support de données portable (1) procède à la commutation en réponse à un ordre externe reçu.

12. Procédé selon une des revendications de 1 à 11, **caractérisé par** détermination si le support de données portable (1) est inséré dans un terminal.

13. Procédé selon la revendication de 1 à 12, **caractérisé en ce que** le support de données portable (1) envoie le signal de telle façon qu'il simule vis-à-vis de l'appareil de lecture une modulation de charge du champ de l'appareil de lecture.

14. Support de données portable (1, 150) ayant une interface sans contact pour la transmission de données du support de données portable (150) à un appareil de lecture (100) auquel des données peuvent être transmises à partir des transpondeurs par modulation de charge d'un champ de l'appareil de lecture, **caractérisé en ce que**
le support de données portable (150) est conçu pour, pour transmettre les données à l'appareil de lecture (100), générer dans un mode actif de fonctionnement un propre champ et l'envoyer en tant qu'un signal qui est exploitable pour l'appareil de lecture (100) en tant qu'une modulation de charge du champ d'appareil de lecture (110) par un transpondeur, et
le support de données portable (150) est conçu pour, pour la transmission de données sans contact, commuter entre une antenne (123) du support de données portable (1) et une antenne (158) du terminal (157) dans lequel le support de données portable (1) est inséré.

15. Support de données portable **caractérisé par** une unité d'interface selon la revendication 14, adaptée à la réalisation d'un procédé selon une des revendications de 1 à 13.

16. Système de transmission de données comprenant un support de données portable (150) selon la revendication 14 ou 15 et le terminal (157) muni de l'antenne utilisable pour le support de données.
